# EUROPEAN PATENT SPECIFICATION

(11) **EP 2 793 030 B1**
(45) Date of publication and mention of the grant of the patent: **16.12.2020**
(21) Application number: 14164360.1
(22) Date of filing: 11.04.2014
(51) Int. Cl.: G01N 35/04, B25J 15/00, G01N 35/00

(54) **Test tube gripper, test tube labeling unit, and test tube preparing apparatus including the same**
Prüfröhrchengreifer, Prüfröhrchenmarkierungseinheit und Prüfröhrchenherstellungsvorrichtung damit
Organe de préhension de tube de test, unité d'étiquetage de tubes d'essai et appareil de préparation de tubes d'essai la comprenant

(30) Priority: 15.04.2013 KR 20130041052; 15.04.2013 KR 20130041054; 15.04.2013 KR 20130041056
(43) Date of publication of application: 22.10.2014
(60) Divisional application: 15179472.4
(73) Proprietor: Energium co., ltd., Gyeonggi-do (KR)
(72) Inventor: Kang, Junghun, Gangseo-gu, Seoul (KR); Lee, Kanghee, Yeongdeungpo-gu, Seoul (KR); Park, Sangjun, Gimpo-si, Gyeonggi-do (KR)
(74) Representative: V.O.

(56) References cited:
- EP-A1- 2 439 143
- EP-A2- 0 745 855
- WO-A1-2009/029696
- WO-A1-2009/035225
- JP-A- H07 132 917
- US-A1- 2010 278 959

## Description

### BACKGROUND OF THE INVENTION

### 1. Field of the invention

The present invention relates to a test tube gripper, a test tube labeling unit, and a test tube preparing apparatus including the same, and more particularly to a test tube preparing apparatus for attaching a label on which various related information is printed on a test tube used in hospitals, laboratories, and universities, a test tube gripper for promptly and precisely separating and moving test tubes inserted into and arranged on a palette, and a test tube labeling unit for converting a feeding direction and a feeding location of a test tube on which a label is attached after the test tube is introduced into the test tube labeling unit to discharge the test tube, the test tube labeling unit having a swing discharge unit with an excellent installation compatibility with a peripheral feeding unit such as a conveyor and a clamp connected to the labeling unit.

### 2. Description of the Prior Art

A long tubular test tube having a blind end is used to hold various samples such as blood, specimens of animals and plants, and chemicals.

The test tube is used while a label containing sample information is attached on the test tube to increase efficiency of work.

In particular, like in a hospital, since a large number of blood collecting tubes (test tubes) are used, the operations are performed not manually but by using an automatic labeling process already.

In this regard, the applicant of the present invention suggested a test tube preparing apparatus through Korean Patent No. 0866410.

The test tube preparing apparatus disclosed in Korean Patent No. 0866410 includes an accommodating unit in which a plurality of test tubes are positioned; a feeding unit disposed above the accommodating unit, for clamping or unclamping a test tube loaded in the accommodating unit while moving on the X-Y plane and elevating; a label attaching unit disposed below the feeding unit, for attaching a label on a circumference of the test tube having dropped from the feeding unit; and a discharge unit disposed below the label attaching unit, for dropping the test tube on which a label has been attached by the label attaching unit to separate the test tube.

The test tube preparing apparatus according to the related art includes a two-layered accommodating unit, a feeding unit disposed above the accommodating unit, a label attaching unit, and a discharge unit, forming a four-layered structure as a whole so that labeling operations on various types of test tubes can be efficiently performed by using a plurality of accommodating units and a feeding unit, but the overall size of the apparatus is large, moving the apparatus is difficult, and the apparatus is not able to be installed in all environments due to its large size.

Further, since the test tube preparing apparatus according to the related art has a feeding unit having a plurality of layers, manufacturing costs of the apparatus also increase and productivity decreases.

A test tube is often manufactured of transparent glass or a resin such that contents may be easily recognized.

In particular, like in a hospital, when a large number of blood collecting tubes (test tubes) are used, efficiency is increased by using an automatic feeding system rather than manually labeling the test tubes.

Feeding units for feeding a test tube into various areas such as a test tube collecting unit, a washing unit, a labeling unit, an inspection unit, and a feeding conveyor are disposed in various sites of the test tube feeding system. In addition, a gripper for holding a test tube is provided at an output end of the feeding unit.

In general, the feeding unit may include at least one linear driving unit and a multi-articulation robot.

WO 2009/035225 A1 discloses a labeling and preparation device for test tubes. At least one storage section places at least one pallet having a set of test tubes at a preset position. At least one transfer section is disposed above the storage section, and clamps or releases one of the test tubes. A labeling section is disposed below the transfer section, receives the test tubes transferred from the transfer section, and attaches a label having information related to a sample on a circumference of each test tube. An ejection section is disposed below the labeling section, and ejects the test tubes to an outside. A controller controls drivers of the transfer section, the labeling section and the ejection section.

JP H07 132917 A discloses an automatic labeling device of test tubes which does not require to line up the vertical direction of test tubes and automatically sticks labels on the surface of test tubes The test tubes supplied from an intermittently driven conveyor B is fed one by one into a waiting path of a selecting rotary body of an orderly feeder C supplying one by one. The front end shape of test tube W is determined by a test tube determiner within the waiting path. Thereafter, the rotary direction of the selecting rotary body is controlled to be normal or reverse so that the lower end of test tube W is positioned at the bottom and it is dropped into the tube insert of a labeling device.

US 2010/278959 A1 discloses an apparatus serving for blow moulding containers. Preforms of a thermoplastic material are heated in the region of a heating zone and subsequently transferred to a blow moulding device. The blow moulding device is provided with at least one blow moulding station for transforming the preforms into the containers. Provided for handling the preforms is a gripper-like transporting element with two gripper arms, which are arranged pivotably in relation to a gripper carrier. Each of the gripper arms can be pivoted by means of at least one lever and is coupled with a central element. The central element is arranged at least partly between the gripper arms. Each of the gripper arms is resiliently clamped with respect to the central element by at least one spring.

WO 2009/029696 A1 discloses a gripper structured to grip an object that comprises at least two opposing side surfaces and at least one top surface, the gripper comprising: at least one passive movement mechanism structured to at least passively move along a z-axis to provide a certain degree of lost motion or play, at least two arms operably connected to the passive movement mechanism and structured to move towards, and away from each other along an x-and/or y-axis, wherein each arm comprises at least a first contact component (pointed plungers) that is structured to contact one of the side surfaces of the object when the arms are moved towards one another; at least one stop operably connected to the passive movement mechanism and/or to at least one of the arms, wherein the stop comprises at least a second contact component that is structured to contact the top surface of the object when the gripper is moved towards the object; and, at least one resilient coupling (flat spring that couples at least one of the first and second contact components to the arms and/or the stop.

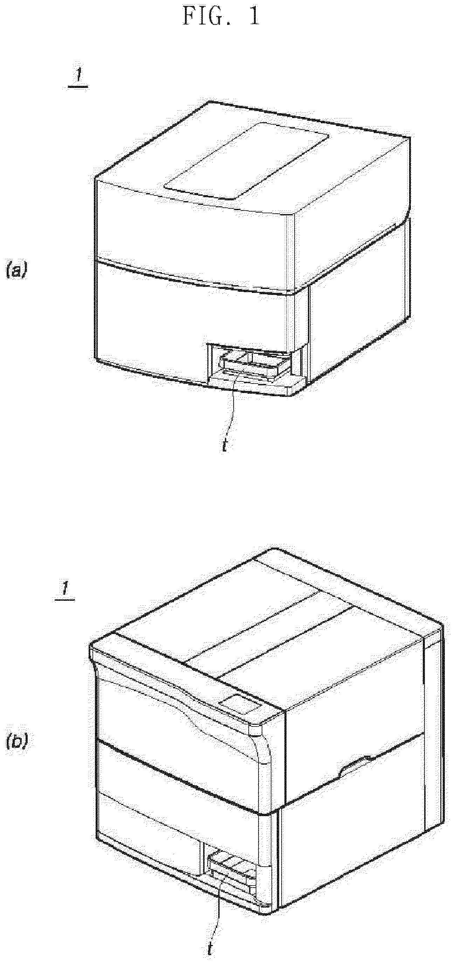

Meanwhile, as shown in FIG. 1, test tubes are kept and managed while lower ends of the test tubes 2 are inserted into a palette 10 having a plurality of holes 11 as in an egg plate to be easily circulated and managed.

In this way, in order to separate and move the test tubes 2 inserted into and arranged in the holes 11 of the palette 10 one by one, the gripper is moved to the test tube 2 by using a gripper feeding unit, opposite side surfaces of the test tube are gripped by using a nipper (gripping ends) of the gripper, and the gripper feeding unit is raised while the test tube is gripped by the gripper to separate the test tube 2 from the hole 11 of the palette 10.

Accordingly, the test tube gripper according to the related art includes only a driving unit for contracting or widening the nipper (gripping ends) while a test tube is interposed between the gripping ends so that the gripper can be designed compactly and simply, but the feeding unit in which the gripper is installed becomes relatively complex and large since an elevation driving unit for raising the test tube to separate the test tube from a hole of a palette should be additionally provided in the gripper feeding unit. Further, since a gripping operation of the gripper and a raising operation of the feeding unit are performed independently, control of the feeding unit also becomes complex. In addition, as gripping and raising operations are performed sequentially, much time is required to separate and move one test tube.

In order to solve the problem, the applicant of the present invention has suggested a test tube preparing apparatus in Korean Patent No. 0866410.

The gripper disclosed in Korean Patent No. 0866410 includes a gripper body; a finger fixing block configured to move upwards and downwards with respect to the gripper body; an upward/downward driving unit for moving the finger fixing block upwards and downwards; a fixed finger one end of which is fixedly coupled to the finger fixing block; and a movable finger rotatably hinge-coupled to the finger fixing block. Then, the movable finger is installed to be resiliently pressed by a return spring toward the fixed finger, and an inclined guide contacting a protruding support end provided at one end of the movable finger is provided at a lower end of the gripper body.

According to the gripper, the fixed finger and the movable finger are spaced apart from each other such that a protruding support end of the movable finger is supported by the inclined guide to accommodate a test tube inside the gripper when the fixed finger and the movable finger are located at a lower end of the gripper body according to an operation of the upward/downward driving unit, and a gripping operation of pressing the test tube by a restoring force of the return spring while the fixed finger and the movable finger are raised according to an operation of the upward/downward driving unit and the protruding support end of the movable finger is avoided from the inclined guide.

However, the test tube a lower end of which is inserted into the hole of the palette may fail to maintain an accurate vertical state and may be inclined slightly, which happens when the test tube is not properly inserted into the hole of the palette.

When the test tube inserted into and arranged in the hole of the palette is inclined, the test tube and the finger collide with each other in the process of moving the gripper forwards toward the test tube, and if the test tube collides with the fixed finger fixed to the finger fixing block according to the related art, the test tube inserted into the hole of the palette may fall down, making it impossible to perform the gripping and separating operation or damaging the test tube severely.

A test tube maintaining a relatively inclined state generates a large inclination error at an upper end of the test tube rather than at a lower end of the test tube, and since the gripper disclosed in Korean Patent No. 0866410 is configured such that the finger is moved forwards toward a lower end of the test tube, it may be smoothly moved without colliding with the feeding unit.

However, while the finger is raised to an upper end of the test tube, a relatively large inclination error may be generated at an upper end of the test tube, causing a malfunction during the gripping operation.

Further, when a lower end of the test tube is strongly press-fitted with the hole of the palette, the finger gripping the test tube may slip due to a strong frictional force between the hole of the palette and the test tube while the gripper is raised in a state in which the gripper grips the test tube, making it impossible to properly separate the test tube.

However, on the contrary, when a strong gripping force of the finger is realized, for example, by setting a resilient coefficient of the return spring pressing the movable finger to be high to solve the problem in which the finger slips from the test tube, the test tube may be distorted or broken due to the strong gripping force.

In order to realize a strong gripping force of the finger, a distance between the fixed finger and the movable finger may be set to be narrow, but even in this case, the test tube may be damaged by a strong gripping operation and the test tubes may easily collide with each other since a space between the fixed finger and the movable finger is narrow when the gripper is initially moved towards toward the test tube by the feeding unit. Thus, in order to overcome the problems, another measure for realizing a precise control should be sought. For example, a large number of sensors should be attached.

The applicant of the present invention has suggested a test tube preparing apparatus of Korean Patent No. 0866410 as a type of a test tube feeding system including a labeling unit.

In the labeling unit disclosed in Korean Patent No. 0866410, a stop space for introducing a test tube dropping from a feeding unit into an interior of the labeling unit is provided, a driving roller disposed close to a circumference of the test tube accommodated in the stop space, for rotating the test tube is fixedly installed, one or more press rollers disposed on an opposite side of the driving roller while the test tube is interposed therebetween, for attaching the test tube toward the driving roller are installed, and an opening/closing cam disposed below the stop space, for dropping the test tube on which a label has been attached downwards is installed.

Accordingly, the labeling unit having the structure outlined above moves a press roller toward the driving roller to fixedly attach the test tube between the driving roller and the press roller after the test tube is introduced into an upper portion of the labeling apparatus, and attaches a label to a circumference of the test tube while rotating the driving roller. Thereafter, the test tube on which the label has been attached drops and is discharged by opening an opening/closing cam that closes a lower end of the test tube.

In this way, since the labeling unit disclosed in Korean Patent No. 0866410 discharges the labelled test tube to a lower side of the labeling unit, installation compatibility by which feeding units should be designed to have a stack structure deteriorates.

Further, according to the labeling unit disclosed in Korean Patent No. 0866410, even considering a separate side discharge unit for moving a label laterally, a driving unit for rotating a driving roller interferes with the left side of an insertion space of a test tube to which a label is attached and a driving unit for pressing a press roller interferes with the right side of the insertion space so that it is difficult to change a discharge direction of the test tube.

### [Prior technical documents]

### [Patent documents]

(Patent document 0001) Document 1: Korean Patent No. 0866410 (2008. 11. 03)

### SUMMARY OF THE INVENTION

Accordingly, the present invention has been made in an effort to solve the above-mentioned problems, and it is an object of the present invention to provide a test tube preparing apparatus that realizes a compact structure which is lightweight and has excellent mobility by improving spatial dispositions and structures of an accommodating unit, a feeding unit, and a label attaching unit which are essentially accompanied by the test tube preparing apparatus.

Another object of the present invention is to provide a test tube preparing apparatus which grips, feeds, discharges, and labels a test tube more promptly and precisely by improving spatial dispositions and structures of an accommodating unit, a feeding unit, a label attaching unit, and a discharge unit.

Another object of the present invention is to provide a test tube preparing apparatus which grips and separates a test tube promptly and safely without causing a malfunction even when a position error is generated as the test tube is inclined forwards, rearwards, leftwards, and rightwards with respect to the accommodating unit or irrespective of an insertion form of the test tube into the accommodating unit.

Another object of the present invention is to provide a test tube gripper which separates and interserts a test tube into a hole of a palette promptly and accurately.

In particular, another object of the present invention is to provide a test tube gripper which realizes a gripping and separating operation of a test tube promptly and safely without causing a malfunction when the test tube is inclined forwards, rearwards, leftwards, and rightwards with respect to a hole of a palette to cause a position error or irrespective of an insertion form of the test tube into a hole of a palette.

The objects are solved by a test tube gripper and a test tube preparation apparatus according to claims 1 and 6, respectively.

In detail at least one of the above objects is solved by a test tube gripper for gripping a test tube, a lower end of which is inserted into a hole of a palette, separating the test tube from the palette, and feeding the test tube, the test tube gripper comprising: a base plate; a gripper body connected to the base plate; a finger fixing block being movable upwards and downwards with respect to the gripper body; an upward/downward driving unit for moving the finger fixing block upwards and downwards; and a finger coupled to the finger fixing block to be moved upwards and downwards in association with the finger fixing block such that facing gripping ends thereof are spaced apart from each other to accommodate the test tube inside the finger when the finger is lowered and the facing gripping ends thereof get closer to each other to grip the test tube accommodated inside the finger, when the finger is raised, wherein the gripper body is rotated forwards and rearwards about the base plate against a forward/rearward reaction force of the test tube generated during an operation of gripping and separating the test tube, and the finger is rotated leftwards and rightwards about the finger fixing block against a leftward/rightward reaction force of the test tube generated during an operation of gripping and separating the test tube and the gripper body is connected to the base plate to be rotated forwards and rewards with respect to the base plate and is configured to be rotated about a rotary shaft to maintain a vertical position due to weight, and wherein the test tube gripper further comprises a first return spring connecting the gripper body and the base plate to press and rotate the gripper body forwards about the rotary shaft.

Further, at least one of the above objects is solved by a test tube preparing apparatus comprising a frame having a two-layered frame structure comprising an upper frame in which a gripper feeding unit is installed, and a lower frame, in which a labeling unit is installed, the upper frame including oppositely arranged left and right accommodating parts in which a plurality of test tubes are accommodated in a vertical state, a gripper feeding unit for feeding a test tube of the plurality of test tubes accommodated in the left and right accommodation parts downwards to the labeling unit, a test tube gripper as defined herein and coupled to the gripper feeding unit, for gripping or separating the test tube, the upper frame further having at least one guide hole disposed at a central portion of the upper frame where the left accommodating part and the right accommodating part face each other, for moving the test tube, fed by the gripper feeding unit and the test tube gripper, downwards to the labeling unit, and wherein the labeling unit is disposed below said guide hole and is configured for attaching a label on a circumference of the test tube having passed through the guide hole.

In an exemplary embodiment, not forming part of the invention, the labeling unit may have a swing discharge unit which allows various changes of design of a test tube feeding system including a labeling unit by accommodating a test tube from the outside for attachment of a label in the labeling unit, attaching a label without a change in a position of the test tube, and converting a position and a direction of the test tube by rotating the test tube to a predetermine angle to discharge the test tube.

An exemplary embodiment, not forming part of the invention, may include a frame having left and right accommodating parts in which a plurality of test tubes are accommodated in a vertical state and having at least one guide hole through which the test tube passes to move between the left and right accommodating parts;
a gripper feeding unit installed in the frame, for feeding the test tube accommodated in the left and right accommodating parts into the guide hole;
a gripper coupled to the gripper feeding unit, for gripping or separating the test tube; and
a labeling unit disposed below the guide hole, for attaching a label on a circumference of the test tube having passed through the guide hole to be fed.

Then, the frame includes an upper frame in which the gripper feeding unit is installed, and a lower frame in which the labeling unit is installed, the upper frame and the lower frame being layered.

An exemplary embodiment, not forming part of the invention, may include a loading unit for blocking the guide hole such that the test tube introduced into the guide hole stands by.

Further, the gripper feeding unit includes a leftward/rightward feeding unit comprising a gantry block configured such that front and rear ends of the gantry block are movable in a leftward/rightward direction with respect to the frame; a forward/rearward feeding unit comprising a forward/rearward movement block to be movable in a forward/rearward direction with respect to the gantry block; and a rotary feeding unit comprising a base plate coupled to the forward/rearward movement block to be rotatable with respect to the forward/rearward movement block. The gripper feeding unit feeds a gripper connected to the base plate in a leftward/rightward direction and a forward/rearward direction with respect to the left and right accommodating parts and rotates the gripper toward the left and right accommodating parts, and wherein the rotary feeding unit may be reciprocally rotated between the left accommodating part and the right accommodating part.

The test tube gripper according to the present invention grips a test tube, a lower end of which is inserted into a hole of a palette, separating the test tube from the palette, and feeds the test tube.

As indicated above, a test tube gripper for gripping a test tube, comprising a lower end of which is inserted into a hole of a palette, separating the test tube from the palette, and feeding the test tube, the test tube gripper includes: a base plate; a gripper body connected to the base plate; a finger fixing block being movable upwards and downwards with respect to the gripper body; an upward/downward driving unit for moving the finger fixing block upwards and downwards; and a finger coupled to the finger fixing block to be moved upwards and downwards in association with the finger fixing block such that facing gripping ends thereof are spaced apart from each other to accommodate the test tube inside the finger when the finger is lowered and the facing gripping ends thereof get closer to each other to grip the test tube accommodated inside the finger. The gripper body is rotated forwards and rearwards about the base plate against a forward/rearward reaction force of the test tube generated during an operation of gripping and separating the test tube, and the finger is rotated leftwards and rightwards about the finger fixing block against a leftward/rightward reaction force of the test tube generated during an operation of gripping and separating the test tube, and the gripper body is connected to the base plate to be rotated forwards and rewards with respect to the base plate and is configured to be rotated about a rotary shaft to maintain a vertical position due to weight.

The test tube gripper further comprises a first return spring connecting the gripper body and the base plate to press and rotate the gripper body forwards about the rotary shaft.

The finger may include a first finger comprising a first fixing piece connected to the finger fixing block, and a first gripping end extending from the first fixing piece; a second finger comprising a second fixing piece rotatably coupled to the finger fixing block, and a second gripping end extending from the second fixing piece to face the first gripping end; and a second return spring connecting the first finger and the second finger, for pressing the first gripping end and the second gripping end such that the first gripping end and the second gripping end get closer to each other.

A gripping interlocking guide may have an inclined guide portion for spacing the second gripping end from the first gripping end while contacting a protruding support end formed in a second fixing piece when the first and second fingers are lowered maximally, and allowing the second gripping end to get gradually closer to the first gripping end when the the first and second fingers are raised.

The first fixing piece may be connected to be rotated leftwards and rightwards from the finger fixing block and the first and second support surfaces for restricting leftward/rightward rotation of the first finger may be provided on an outer peripheral surface of the first fixing pice connected to the finger fixing block 340.

The gripper body may include an upper fixed member connected to the base plate; a lower fixed member spaced downwards from the upper fixed member, for restricting downward movement of the finger; and a connecting housing connecting the upper fixed member and the lower fixed member, for guiding upward/downward movement of the finger fixing block.

In an exemplary embodiment, not forming part of the invention, the test tube labeling unit may include a frame comprising a holding member supporting a test tube introduced into the test tube labeling unit; a driving roller disposed one side of a circumference of the test tube, for giving rotating power to the test tube; and a press roller disposed on an opposite side of the driving roller while the test tube is interposed between the press roller and the driving roller, for allowing the test tube to contact the driving roller or be spaced apart from the driving roller. The holding member is rotated in a section between a first position for introducing the test tube into the test tube labeling unit and a second position for discharging the test tube to the outside.

In an exemplary embodiment, not forming part of the invention, the gripper body may protrude from an inside to an outside of the frame while being rotated from the first position to the second position.

In an exemplary embodiment, not forming part of the invention, the holding member includes: an upper introduction opening for introducing the test tube into the test tube labeling unit; a lower stopper supporting a lower end of the test tube; and a side stopper connecting the upper introduction opening and the lower stopper and having a side opening for allowing separation of the test tube at one side thereof.

A pusher may for example be inserted into an interior of the holding member rotated to the second position is provided in the frame, and the test tube is separated through the side opening as the test tube is pushed outwards by the pusher inserted into the holding member while the holding member is rotated to the second position.

The test tube labeling unit may for example include an insertion depth adjusting unit having a movable stopper for supporting a lower end of the test tube inserted into the holding member.

When one driving roller is provided, two press rollers may be provided to secure three support points on a circumference of the test tube together with the driving roller.

In an exemplary embodiment, not forming part of the invention, the press roller includes: a fixed press roller fixedly installed in the frame; and a movable press roller connected to the frame to get closer to or spaced apart form a rotation center of the test tube, wherein the
test tube labeling unit may include a rotary member configured such that a central portion of the rotary member is coupled to the frame by a hinge, the movable press roller may be rotatably coupled to one end of the rotary member with respect to the hinge, and an actuating cylinder may be connected to an opposite end of the rotary member with respect to the hinge.

According to the present invention, the overall size of a test preparing apparatus becomes compact by collectively disposing an accommodating unit, a feeding unit, a label attaching unit, and a discharge unit such that they form a two-layered frame structure. Further, due to its light weight and excellent mobility, the present invention is able to be installed in various environments.

Further, operation times of various units for one test tube are optimally distributed and operation efficiency due to promptness and preciseness becomes excellent by excluding an un necessary driving environment.

Further, even when an arrangement position of a test tube accommodated in an accommodating unit is inferior or the test tube keeps being press-fitted with the accommodating unit, the test tube can be gripped or separated promptly and safely without causing a malfunction, further increasing a feeding efficiency of the test tube.

Further, even when an arrangement position of a test tube a lower end of which is inserted into a hole of a palette is inferior or a strong frictional force exists between a hole of a palette and a lower end of the test tube, the test tube can be gripped and separated promptly and safely without causing a malfunction, making it possible to increase feeding efficiency of the test tube.

In addition, installation compatibility with peripheral feeding units becomes excellent by accommodating a test tube at a first position, attaching a label at the first position, and rotating the test tube at the first position to a predetermined angle such that a position and a direction of the test tube are converted to discharge the test tube.

### BRIEF DESCRIPTION OF THE DRAWINGS

The above and other objects, features and advantages of the present invention will be more apparent from the following detailed description in conjunction with the accompanying drawings, in which:
FIG. 1 shows perspective views of test tube preparing apparatuses;
FIG. 2 shows perspective views of the test tube preparing apparatuses in opened states;
FIG. 3 is a perspective view of the test tube preparing apparatus while a cover member is removed from the test tube preparing apparatus;
FIGS. 4A and 4B are a perspective view and a plan view of an upper frame;
FIG. 5 shows exemplary plan views for explaining a configuration and an operation of a loading unit according to an embodiment of the present invention;
FIG. 6 is a perspective view showing configurations of a guide hole and a loading unit according to another embodiment of the present invention;
FIG. 7 shows exemplary plan views for explaining a configuration and an operation of a loading unit according to another embodiment of the present invention;
FIGS. 8 to 10 are perspective views for explaining a configuration and an operation of a gripper feeding unit;
FIG. 11 is an exploded perspective view showing a configuration of a gripper;
FIG. 12 is a side view of the gripper, and shows an example of an operation of a tilting rotary shaft;
FIG. 13 shows a perspective view and a cutaway perspective view of a configuration of a connecting housing;
FIG. 14 is a sectional view showing a connecting structure of the connecting housing and a finger fixing block;
FIG. 15 is a perspective view showing a configuration and a connecting structure of the finger fixing block and a finger;
FIG. 16 shows views viewed from various sides to show a structure of the gripper when the finger is in a lowered position;

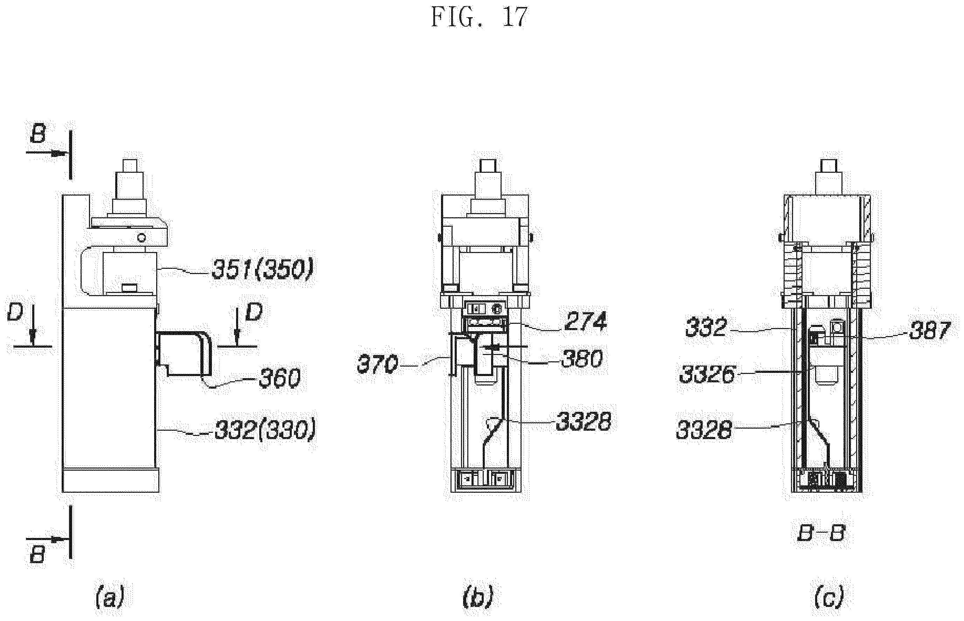

FIG. 17 shows views viewed from various sides to show a structure of the gripper when the finger is in a raised position;
FIG. 18 is a sectional view showing a connecting structure of the finger fixing block and a first finger;
FIGS. 19A and 19B are a sectional view taken along line C-C of FIG. 16 and a sectional view taken along line D-D of FIG. 17 to show a gripping operation of the finger;
FIG. 20 is a concept view showing a reaction force which may be transferred from a test tube during a gripping operation of the test tube;
FIG. 21 is a perspective view showing a configuration of a labeling unit, not part of the invention;
FIG. 22 is an exemplary plan view showing a configuration of a label supply unit, not part of the invention;
FIG. 23 is a front perspective view of the labeling unit;
FIG. 24 is a rear perspective view of the labeling unit;
FIG. 25 is a front perspective view of the labeling unit from which a front frame is seprarated;
FIG. 26 is an exploded perspective view showing a configuration of the labeling unit;
FIG. 27 shows views viewed from various sides to show a configuration of a holding member;
FIGS. 28A and 28B are an exploded perspective view and an exemplary operation view showing a test tube insertion depth adjusting unit;
FIG. 29 is a front view showing configurations of a driving roller and a press roller;
FIG. 30 is an exemplary sectional view taken along line A-A of FIG. 29;
FIG. 31 is a plan view showing a label attaching operation by the driving roller and the press roller;
FIG. 32 is an exemplary operation view showing a state in which a test tube is introduced toward the labeling unit; and
FIG. 33 is an exemplary operation view showing a state in which the test tube is withdrawn from the labeling unit.

### DETAILED DESCRIPTION OF THE EXEMPLARY EMBODIMENTS

Hereinafter, features and effects of the present invention which have been or have not been described above will be more apparent through exemplary embodiments of the present invention with reference to the accompanying drawings.

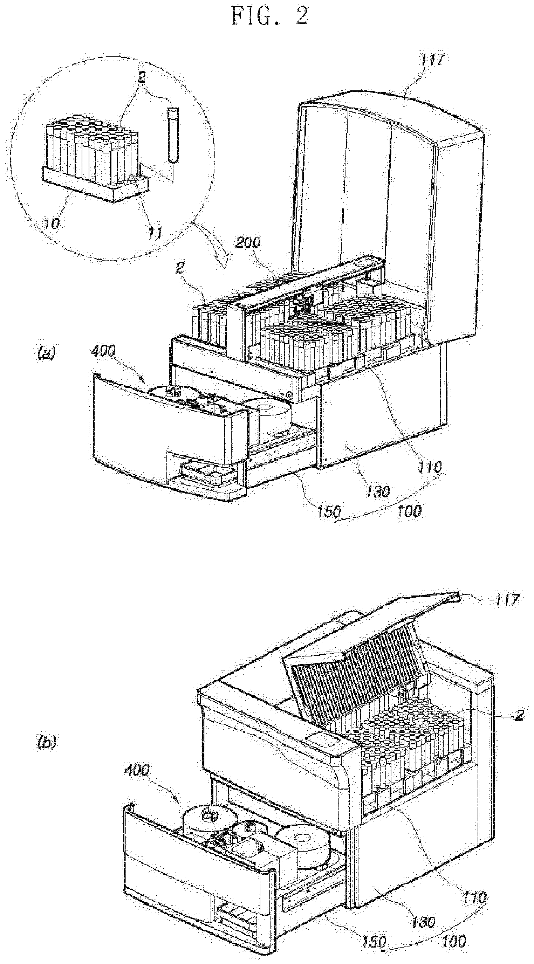

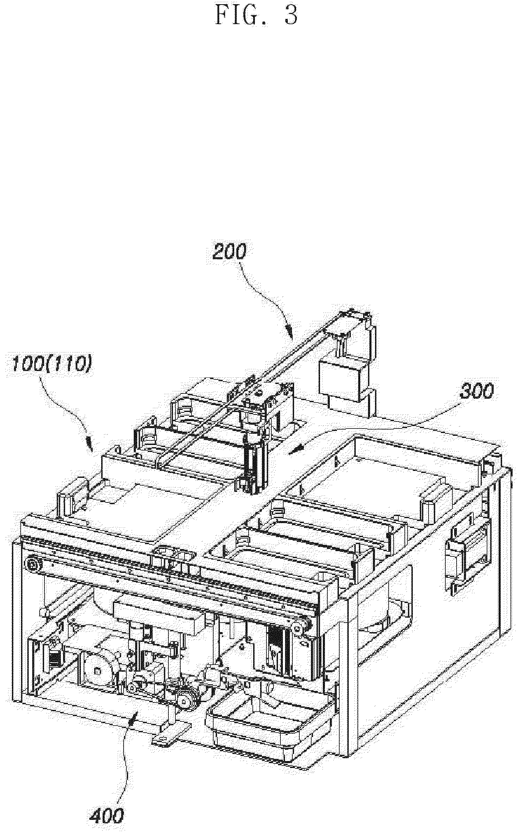

FIG. 1 shows perspective views of a test tube preparing apparatus. FIG. 2 shows perspective views of the test tube preparing apparatuses in opened states. FIG. 3 is a perspective view showing a unit constituting the present invention while a cover member is removed.

The test tube preparing apparatus 1 according to the present invention includes a frame 100, a gripper feeding unit 200, a gripper 300, and a labeling unit 400.

The frame 100 is a member supporting various units constituting the test tube preparing apparatus and the test tube 2, and includes an upper frame 110, a support frame 130, and a lower frame 150.

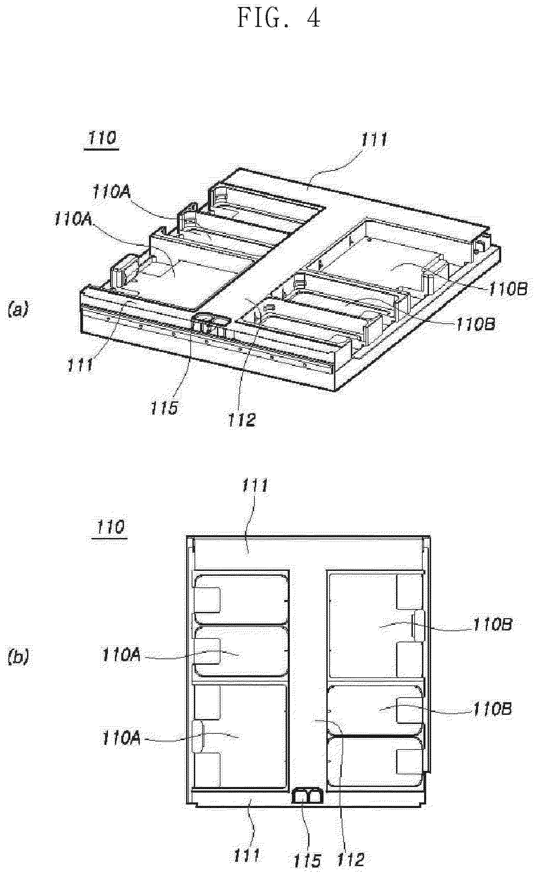

Referring to FIG. 4, the upper frame 110 includes a left accommodating part 110A and a right accommodating part 110B in which a plurality of test tubes 2 are accommodated on an upper surface thereof, and spaces in which one or more pallets 10, into which a plurality of test tubes 2 are vertically inserted in advance, may be accommodated are provided in the left and right accommodating parts 110A and 110B. The same type of or different types of test tubes 2 may be provided in the left and right accommodating parts 110A and 110B.

At least one guide hole 115 for moving the test tube 2 fed by the gripper feeding unit 200 and the gripper 300 downwards is formed in the upper frame 110. The guide hole 115 is disposed at a central portion of the upper frame 110 where the left accommodating part 110A and the right accommodating part 110B face each other.

The upper frame 110 according to the embodiment of the present invention includes a pair of front and rear frames 111 and a central frame 112 connecting the centers of the front and rear frames 111, and thus the left and right accommodating parts 110A and 110B are disposed on opposite sides of the central frame 112 while the central frame 112 is interposed therebetween. Accordingly, at least one guide hole 115 is formed in the central frame 112 such that the test tube 2 is inserted into the guide hole 115 to be moved downwards. The guide hole 115 may be formed at any lengthwise location of the central frame 112, but as shown, it is preferable that the guide hole 115 may be formed at the front side of the central frame 112.

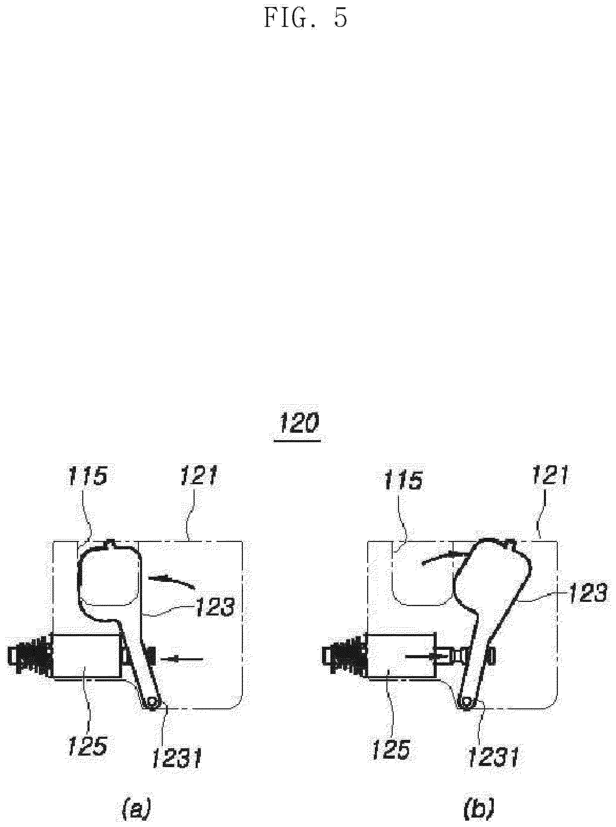

Referring to FIG. 5, a loading unit 120 for allowing the test tube 2 fed by the gripper feeding unit 200 and the gripper 300 to stand by while the test tube 2 is positioned in the loading unit 120 may be provided in the guide hole 115. That is, the loading unit 120 allows the test tube 2 fed by the gripper feeding unit 200 and the gripper 300 to pass through the guide hole 115 and temporarily stand by to prevent the test tube 2 from being dropped downwards in the case where the labeling unit 400 disposed below the loading unit 120 is labeling the previously moved test tube 2 or the labeling unit 400 is not being driven while maintenance is performed.

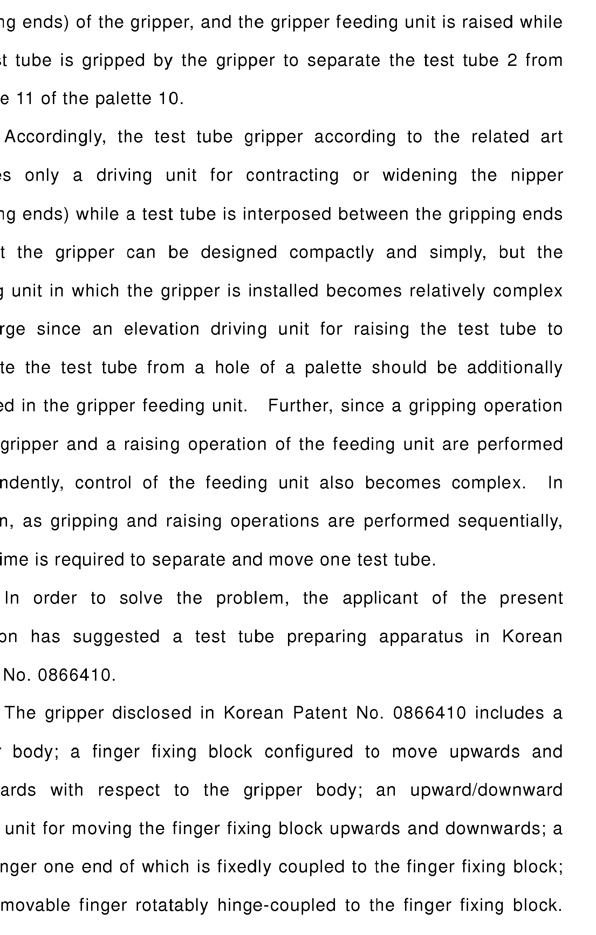

Referring to FIG. 6, the loading unit 120 according to the embodiment of the present invention includes a guide hole member 121, a blocking plate 123, and a loading driving unit 125.

The guide hole member 121 is a member having a guide hole 115, and is coupled to the front end of the central frame 112.

The blocking plate 123 is a member for opening or blocking the guide hole 115, and one end of the blocking plate 123 is coupled to the guide hole member 121 by a hinge 1231 to be rotatable to a side of the guide hole 115 about the hinge 1231. Accordingly, the blocking plate 123 opens and closes the guide hole 115 formed in the guide hole member 121 while being rotated about the hinge 1231.

The loading driving unit 125 provides driving power such that the blocking plate 123 may be rotated about the hinge 1231, and is installed in the guide hole member 121 to be connected to the blocking plate 123. The loading driving unit 125 may include a cylinder or an electric motor.

Accordingly, the blocking plate 123 opens and closes the guide hole 115 while being rotated about the hinge 1231 as the loading driving unit 125 expands or contracts. Accordingly, a lower end of the test tube 2 fed by the gripper feeding unit 200 and the gripper 300 and positioned in the guide hole 115 is supported by the blocking plate 123 to be fixed or the guide hole 115 is opened such that the test tube 2 passes through the guide hole 115 to be moved downwards.

Meanwhile, two or more guide holes 115 may be formed in the guide hole member 121.

Referring to FIG. 4, for example, when two guide holes 115 are provided, one test tube 2 is manually (by the user) positioned in one of the guide holes 115 in advance to initially feed the test tube 2 by the gripper feeding unit 200 and the gripper 300 and label the test tube 2 manually positioned in advance during an operation of feeding the test tubes 2 accommodated in the left and right accommodating parts 110A and 110B into the guide holes 115 by using the gripper feeding unit 200 and the gripper 300 at an initial stage of the operation of the test tube preparing apparatus in advance. Thereafter, the labeling unit 400 continuously performs sequential labeling operations on the test tube 2 fed by the gripper feeding unit 200 and the gripper 300.

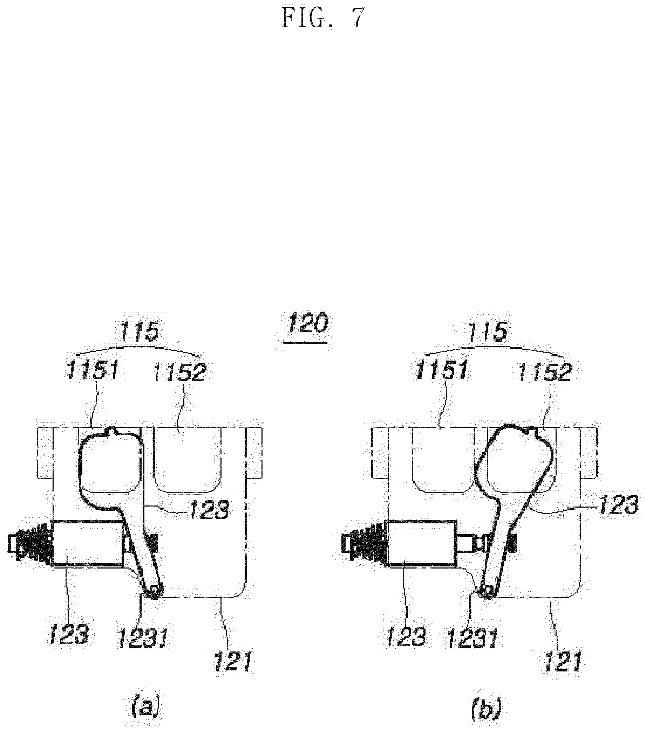

According to the test tube preparing apparatus of the present invention, since a time for labeling one test tube 2 by using the labeling unit 400 is substantially shorter than a time for feeding the test tubes 2 accommodated in the left and right accommodating parts 110A and 110B to the guide holes 115 by using the gripper feeding unit 200 and the gripper 300, movement of the test tube 2 is not delayed even if one guide hole 115 is provided as shown in FIG. 5. However, if a time for feeding the test tubes 2 accommodated in the left and right accommodating parts 110A and 110B by using the gripper feeding unit 200 and the gripper 300 is longer than a time for labeling the test tube 2 by using the labeling unit 400, a test tube feeding operation by using the gripper feeding unit 200 and the gripper 300 can be prevented from being intermittently stopped by providing two or more guide holes 115 as shown in FIGS. 6 and 7, so that a labeling operation can be performed without stopping the labeling unit 400.

FIGS. 6, 7A, and 7B show a perspective view and exemplary plan views for showing a configuration and an operation of the loading unit when two guide holes are provided in another embodiment of the present invention.

Even when two guide holes 115, that is, first and second guide holes 1151 and 1152 are provided, the loading unit 120 may have the same configuration as in the embodiment shown in FIG. 6. That is, the loading unit 120 includes a guide hole member 121, a blocking plate 123, and a loading driving unit 125, and a description of the elements will not be repeated. Reference numeral S1 denotes a test tube detecting sensor for detecting a test tube 2 which is in stand by in the first and second guide holes 1151 and 1152, and reference numeral 116 denotes a guider which allows the test tube 2 fed in a direction A by the gripper feeding unit 200 and the gripper 300 to be vertically lowered and inserted into the guide hole 115 without being inclined when the test tube 2 is finally separated from the gripper 300.

Meanwhile, referring to FIG. 7, when the first and second guide holes 1151 and 1152 are provided, the blocking plate 123 is rotated about the hinge 1231 between the first and second guide holes 1151 and 1152 as the loading driving unit 125 expands and contracts. That is, as the loading driving unit 125 contracts as shown in FIG. 7A, the blocking plate 123 blocks the first guide hole 1151 and opens the second guide hole 1152, and, on the contrary, as the loading driving unit 125 expands as shown in FIG. 7B, the blocking plate 123 opens the first guide hole 1151 and blocks the second guide hole 1152.

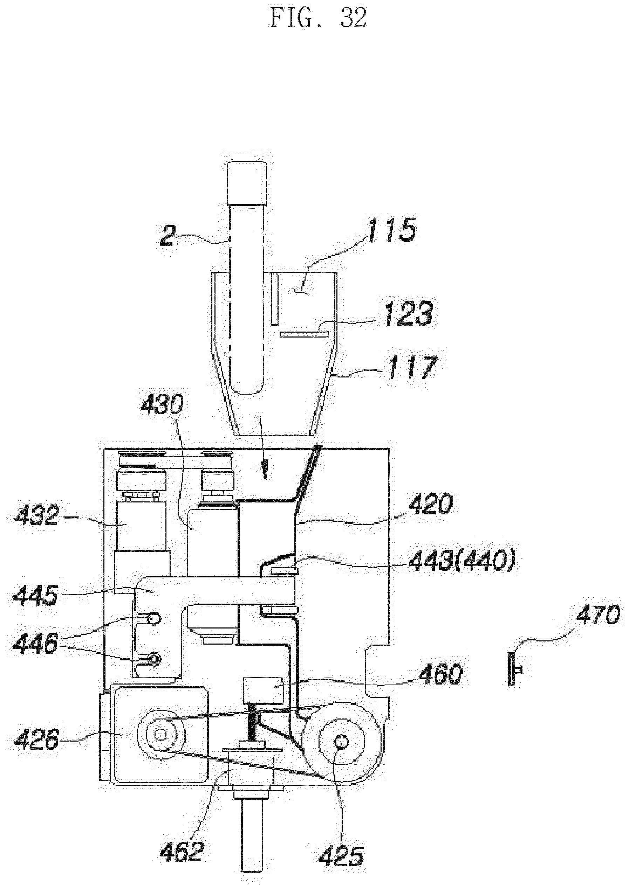

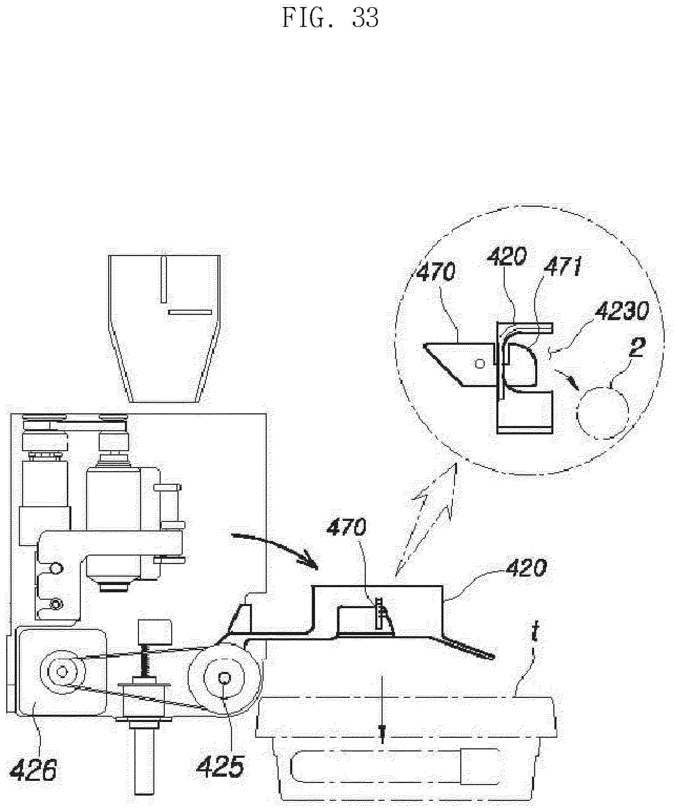

Accordingly, the gripper feeding unit 200 and the gripper 300 may feed and supply test tubes toward the first guide hole 1151 and the second guide hole 1152 alternately, and may supply test tubes 2 only toward one of the first guide hole 1151 and the second guide hole 1152 as needed. Referring to FIGS. 32 and 33, when the two or more guide holes 115 are provided, an inclined guide 117 which becomes narrower as it goes downwards is provided at a lower portion of each of the guide holes 115 such that the test tube 2 may be guided toward the labeling unit 400 disposed below the guide hole 115 even if the test tube 2 is introduced into any one of the guide holes 115.

Subsequently, as shown in FIGS. 1 and 2, an opening/closing cover 117 may further be provided in the upper frame 110. The opening/closing cover 117 isolates the test tube 2 accommodated in the left and right accommodating parts 110A and 110B from the outside during an operation of the test tube preparing apparatus which cleans the test tube 2 and the feeding unit 200 and to prevent careless entry of the test tube when the opening/closing cover 117 is opened or to prevent the feeding unit 200 from malfunctioning. It is preferable that the opening/closing cover 117 is formed of a transparent material such that an inside of the opening/closing cover 117 may be easily recognized. The opening/closing cover 117 may open and close the left and right accommodating parts 110A and 110B at a time as shown in FIGS. 1A and 2A, or may be independently installed on the left accommodating part 110A and the right accommodating part 110B as shown in FIGS. 1B and 2B. Although not shown, the opening/closing cover 117 may have a rotatable opening/closing structure or a slidable opening/closing structure.

The support frames 130 are members for supporting the upper frame 110 with the upper frame 110 being spaced apart from the bottom by a predetermined height, and a side cover may be installed to connect the support frames 130.

The lower frame 150 is a member for providing a space through which the test tube 2 is introduced from the guide hole 115 of the upper frame 110 to the lower side, and the labeling unit 400 is installed above the lower frame 150. A tray t on which the test tube 2 is placed and on which an labeling operation is completely performed is provided at one opening portion of the lower frame 150. The lower frame 150 according to the embodiment of the present invention has a slidable opening/closing structure with respect to the support frames 130, and due to the slidable opening/closing structure, label paper of the labeling unit 400 installed in the test tube preparing apparatus maybe replaced and the labeling unit 400 may be easily maintained. The slidable opening/closing structure is well known in the art, and a detailed description thereof will be omitted.

As described above, since the present invention has a two layer structure such that the left and right accommodating parts 110A and 110B, the gripper feeding unit 200, and the gripper 300 are disposed above the upper frame 110 having the guide hole 115 and the labeling unit 400 and a discharge part are disposed above the upper frame 110 while the upper frame is interposed therebetween, a more compact structure can be constructed as compared with Korean Patent No. 0866410 and thus may be easily installed and moved within narrow spaces by user such in hospitals, laboratories, and professors' offices.

The gripper feeding unit 200, the gripper 300, and the labeling unit 400 also also assist in satisfing the requirement of constructing a compact structure of the apparatus.

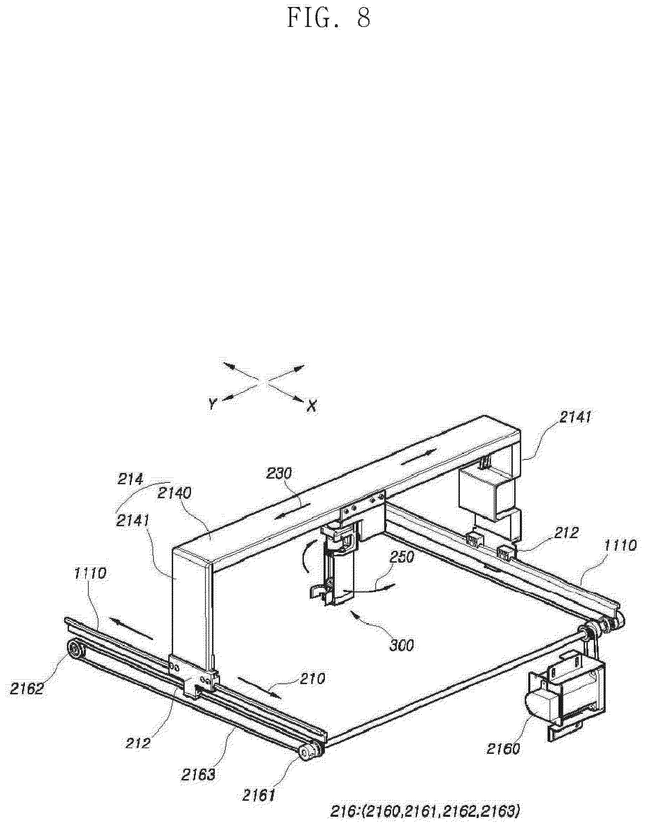

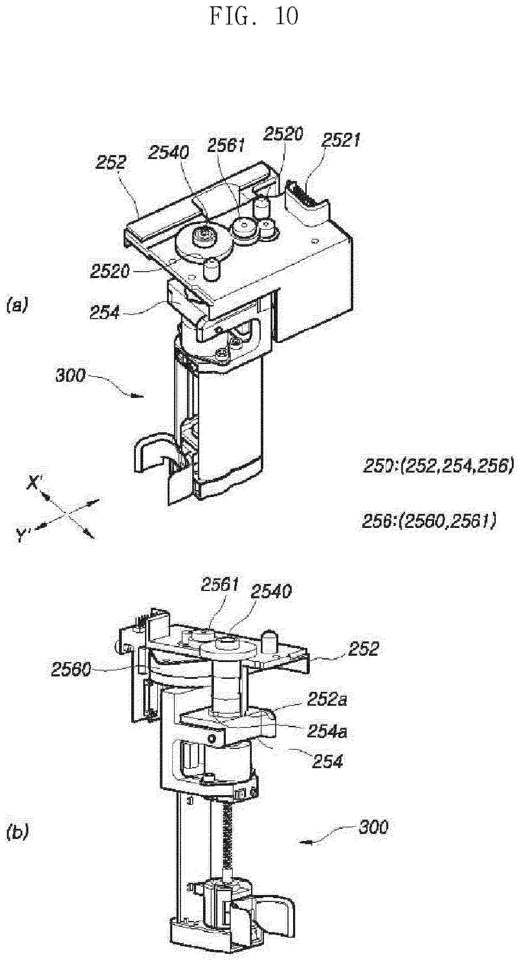

FIGS. 8 to 10 are perspective views for explaining a configuration and an operation of a gripper feeding unit.

The gripper feeding unit 200 is installed in the upper frame 110, and is a unit for feeding the test tube 2 accommodated in the left and right accommodating parts 110A and 110B of the upper frame 110 to the guide hole 115 of the upper frame 110. That is, the gripper feeding unit 200 feeds the gripper 300 to the test tube 2 accommodated in the left and right accommodating parts 110A and 110B or feeds the gripper 300 gripping the test tube 2 to the guide hole 115.

The gripper feeding unit 200 includes a leftward/rightward feeding unit 210, a forward/rearward feeding unit 230, and a rotary feeding unit 250.

The leftward/rightward feeding part 210 is a unit for moving the gripper 300 to the left and right sides of the upper frame 110, and includes a pair of leftward/rightward movement blocks 212, a gantry block 214, and a leftward/rightward driving unit 216.

The leftward/rightward movement blocks 212 are members which are coupled to the forward/rearward frames of the upper frame 110 to be slid leftwards and rightwards, respectively, and a rail coupling structure is installed on the sliding surfaces of the forward/rearward frames 111 and the leftward/rightward movement blocks 212.

The gantry block 214 is a gantry structure coupled to the rightward/leftward movement blocks 212 to interlock with the leftward/rightward movement blocks 212, and includes a horizontal member 2140 having a predetermined length in a forward/rearward direction of the upper frame 110, and a pair of forward/rearward supports 2142 for supporting opposite ends of the horizontal member 2140. Lower ends of the forward/rearward supports 2142 are coupled to the leftward/rightward movement blocks 212, respectively.

Here, the leftward/rightward movement blocks 212 and the forward/rearward supports 2142 of the gantry block 214 are coupled to each other by fasteners to be easily coupled or separated to and from each other. This allows the forward/rearward feeding unit 230, the rotary feeding unit 250, and the gripper 300 which are installed on the gantry block 214 as well as the gantry block 214 to be easily maintained or replaced.

The leftward/rightward driving unit 216 is a unit for providing leftward and rightward driving power to the leftward/rightward movement blocks 212. Referring to FIG. 8, in the leftward/rightward driving unit 216 according to the embodiment of the present invention, a driving shaft 2161 and a driven shaft 2162 are installed at opposite ends of the forward/rearward frames 111 of the upper frame 110 to be connected to each other by pulleys and belts 2163 such that they interlock with each other while being spaced apart from each other, and lower ends of the leftward/rightward blocks 212 are fixedly coupled to the belts 2163. Accordingly, the gantry block 214 together with the leftward/rightward movement blocks 212 reciprocate on the forward/rearward frames 111 in a leftward/rightward direction of the upper frame 110 as the leftward/rightward driving motor 2160 connected to the driving shaft 2161 rotates forwardly and reversely. The power transmission members including the pulleys and the belts may be replaced by sprockets and chains, bolt screws and nut blocks, and racks and pinions.

Reference number 1110 of FIG. 8 denotes guide rails provided in the forward/rearward frames 111 and coupled to the leftward/rightward movement blocks 212 to guide leftward and rightward movements of the leftward/rightward movement blocks 212.

The forward/rearward feeding unit 230 is a unit for moving the gripper 300 to the front and rear sides of the upper frame 110, and includes a forward/rearward movement block 232 and a forward/rearward driving unit 234.

The forward/rearward movement block 232 is a member coupled to the horizontal member 2140 of the gantry block 214 to be slid forwards and rearwards, and a rail coupling structure is installed on the sliding surfaces of a lower portion of the horizontal member 2140 and an upper portion of the forward/rearward movement block 232.

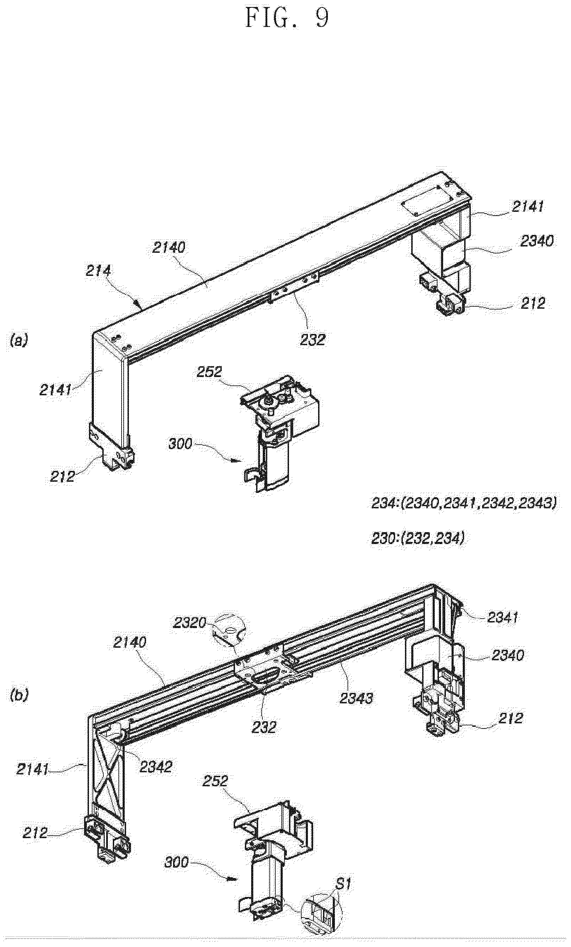

The forward/rearward driving unit 234 is a unit for providing forward and rearward driving power to the forward/rearward movement block 232. Referring to FIG. 9, in the forward/rearward driving unit 234 according to the embodiment of the present invention, a driving shaft 2341 and a driven shaft 2342 are installed at opposite ends of the horizontal member 2140 of the gantry block 214 to be connected to each other by pulleys and belts 2343 such that they interlock with each other while being spaced apart from each other, and the forward/rearward movement block 232 is fixedly coupled to the belt 2343. Accordingly, the forward/rearward block 232 reciprocate on the horizontal member 2140 forwards and rearwards as the forward/rearward driving motor 2340 connected to the driving shaft 2341 rotates forwardly and reversely.

The rotary feeding unit 250 is a unit for rotating the gripper 300 such that the gripper 300 faces the left accommodating part 110A or the right accommodating part 110B, and includes a fixed support block 252, a gripper base plate 254, and a rotation driving unit 256.

The fixed support block 252 is fixedly coupled to the forward/rearward movement block 232 to interlock the forward/rearward block 232.

Here, the forward/rearward movement block 232 and the fixed support block 252 are coupled to each other by a fastener such that they may be coupled or separated to and from each other. This allows the gripper 300 as well as the rotation driving unit 256 installed in the fixed support block 252 to be easily maintained or replaced. A connection boss 2520 inserted into a connection hole 2320 formed on a lower surface of the forward/rearward movement block 232 is formed on an upper surface of the fixed support block 252, so that when the fixed support block 252 is coupled to the forward/rearward movement block 232, an electrical connector 2521 of the fixed support block 252 can be promptly and accurately connected and an assembly location thereof can be maintained due to a natural insertion of the connection boss 2520 into the connection hole 2320.

The gripper base plate 254 is a member for supporting the gripper 300, and is rotatably coupled to the fixed support block 252. That is, the gripper base plate 254 is connected to a lower end of the fixed support block 252 through a vertical rotary shaft 2540.

Here, the base plate 254 may be configured to be continuously rotated forwardly or reversely about the rotary shaft 2540 with respect to the fixed support block 252, but it is preferable that the base plate 254 is reciprocally rotated between a section (180 degrees) between the left and right accommodating parts 110A and 110B. That is, the base plate 254 may have a rotation angle of 90 degrees toward the left and right sides with respect to a front side (facing the guide hole: 0 degrees) of the upper frame 110. A stopper 252a is provided thereto at one side of the fixed support block 252, and a prevention step 254a for restricting a maximum rotation angle is formed in the gripper base plate 254 to correspond to the stopper 252a.

The rotation driving unit 256 is a unit for providing rotation driving power to the gripper base plate 254, and the rotation driving unit 256 according to the present invention is configured such that a rotation driving motor 2560 installed in the fixed support block 252 and a rotary shaft 2540 of the gripper base plate 254 are connected to each other by a reducer gear group 2561.

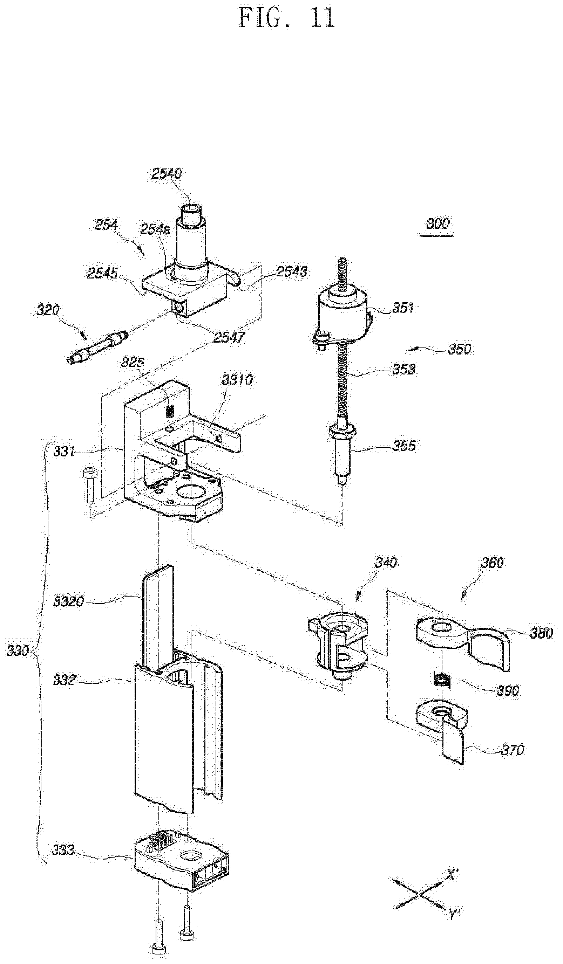

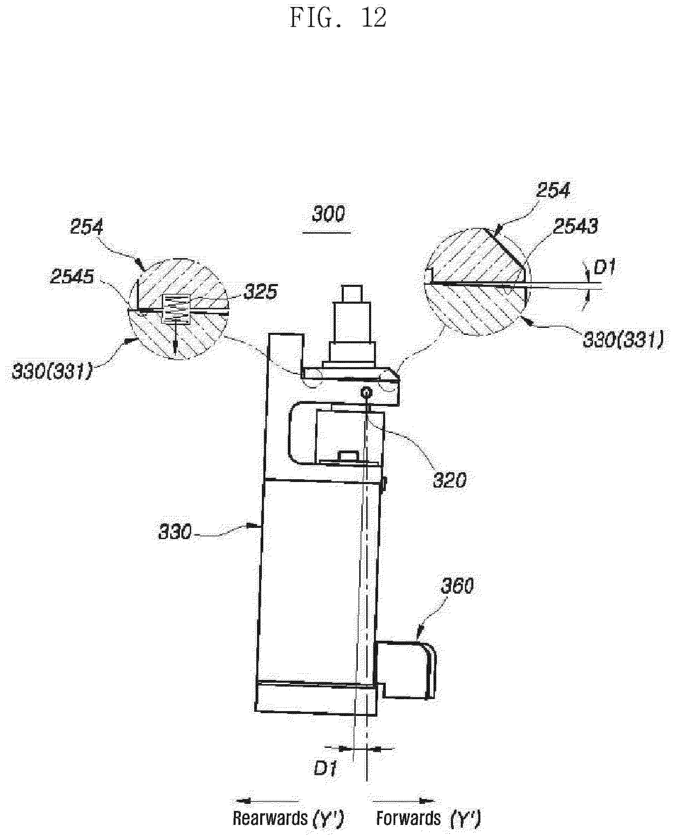

FIGS. 11 and 12 are views showing a configuration of the gripper.

Referring to FIGS. 11 and 12, the gripper 300 includes a gripper body 320, a finger fixing block 340, an upward/downward driving unit 350, and a finger 360.

The base plate 254 is connected to the gripper feeding unit. That is, the base plate 254 is a member coupled to an output end such as a linear driving unit and a multi-articulation robot to support the gripper body 330 according to the present invention, and the base plate 254 may have various different shapes from those shown in the drawings, for coupling to various types of feeding units, or may additionally have separate brackets having various structures.

The base plate 310 according to the embodiment of the present invention is configured such that a lower end of the base plate 310 coupled to the gripper body 330 has a plate structure and one end (front end) of the base plate 310 is provided with a shaft hole 311 through which a tilting rotary shaft 320 passes.

The gripper body 330 is a housing structure for supporting and protecting various parts of the gripper 300, and is coupled to a lower portion of the base plate 254 constituting the rotary feeding unit 250 to maintain a block shape extending downwards vertically.

Then, the gripper body 330 is connected to the base plate 254 via a tilting rotary shaft 320. That is, a shaft hole 3310 corresponding to the shaft hole 2547 formed in the base plate 254 is formed at an upper end (front side) of the gripper body 330.

The tilting rotary shaft 320 connecting the base plate 254 and the gripper body 330 is installed in a leftward/rightward direction X' perpendicular to a forward/rearward direction Y' in which the tilting rotary shat 320 gets closer to or farther away from the test tube 2 by the movement of the gripper feeding unit 200. Accordingly, the gripper body 330 is configured to be rotated in a forward/rearward direction about the tilting rotary shaft 320.

Due to the tilting rotary shaft 320, the gripper body 330 may normally maintain a vertical position (a perpendicular direction) from the base plate 254 due to weight. In this case, since the gripper body 330 is configured such that the finger 360 protrudes forwards, a rotation location of the gripper body 330 may be changed according to whether the test tube 2 is gripped due to a change in the center of weight. In order to accurately separate the gripped test tube later, the gripper body 330 should always maintain a vertical position (a perpendicular location) with respect to the base plate 254 irrespective of whether the test tube 2 is gripped.

According to the embodiment of the present invention, a tilting rotary shaft 320 connecting the base plate 254 and the gripper body 330 is inclined forwards with respect to a vertical line passing through the center of weight of the gripper body 330 (when the test tube is gripped), and a first position restricting stopper 313 one end of the gripper body 330 contacts is provided at one side of the base plate 254, so that the gripper body 330 is rotated about the tilting rotary shaft 320 due to weight such that one end of the gripper body 330 contacts the first position restricting stopper 313 which prevents the gripper body 330 from passing through the vertical line crossing the tilting rotary shaft 320 to be rotated forwards. Meanwhile, a second position restricting stopper 315 an opposite end of the gripper body 330 contacts may be further provided at an opposite side of the base plate 254, and when the second position restricting stopper 315 is provided, a rotation angle of the gripper body 330 by which the gripper body 330 may be rotated maximally is restricted by a reaction force transferred from the test tube 2 during an operation of gripping the test tube 2. A forward/rearward rotation angle D1 given to the gripper body 330 is achieved by realizing an angle corresponding to a forward/rearward inclination of the test tube 2 inserted into a hole 11 of a palette 10, and accordingly, a tilting rotation angle of the gripper body 330 may be adjusted by properly changing a separation between the first position restricting stopper 313 and the second position restricting stopper 315.

A first return spring 325 for returning the gripper body 330 to a vertical position again by separating the gripper body 330 from the base plate 254 may be provided between the base plate 254 provided in the rotary feeding unit 250 and the gripper body 330. In this way, the first return spring 325 may promptly maintain a vertical position of the gripper body 330 as compared with a case in which the gripper body 330 is rotated rearwards about the tilting rotary shaft 320 and returns to a vertical position due to weight. The first return spring 352 should be designed to have a predetermined elastic coefficient such that the gripper body 330 may be easily rotated rearwards by a reaction force transferred from the test tube 2.

The gripper body 330 according to the embodiment of the present invention includes an upper fixed member 331 coupled to the base plate 254 of the rotary feeding unit 250 by the tilting rotary shaft 320 and into which the upward/rearward driving unit 350 is mounted; a lower fixed member 333 spaced downwards apart from the upper fixed member 330 to secure an upward/rearward movement space of the finger fixing block 340; and a connecting housing 332 connecting the upper fixed member 331 and the lower fixed member 333.

The upper fixed member 331 has a stapler shape when viewed from a side, and an upper front end of the upper fixed member 331 is connected to the base plate 254 by the tilting rotary shaft 320. An upward/downward driving motor 351 constituting the upward/downward driving unit 350 is mounted to a central interior of the upper fixed member 331.

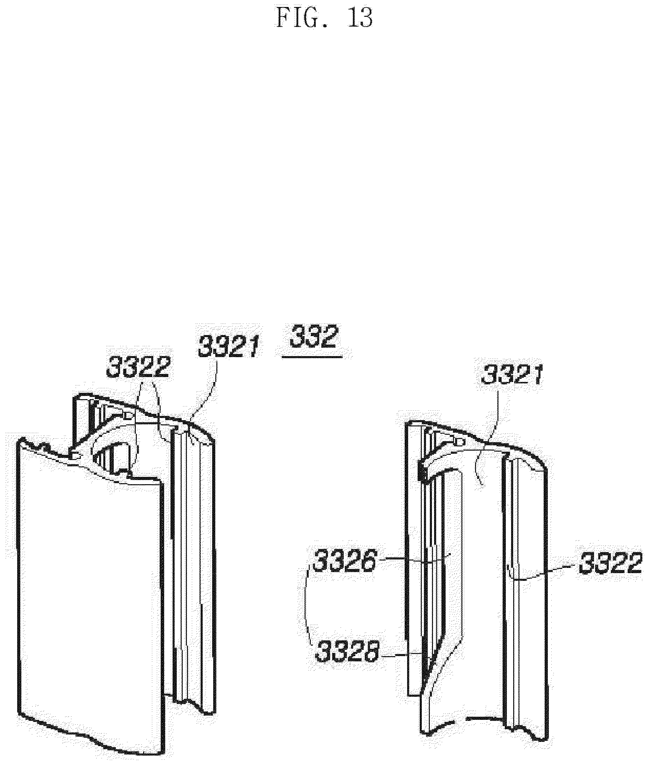

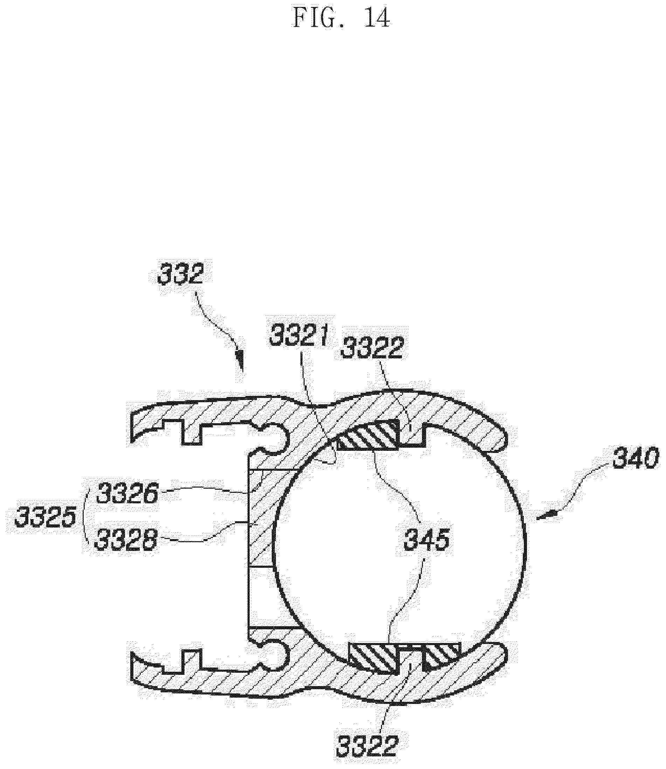

Referring to FIGS. 13 and 14, the connecting housing 332 surrounds the finger fixing block 340 as it is moved upwards and downwards, and has an opened structure at the front end of the connecting housing to protrude a gripped end of the finger 360. Reference numeral 3320 of FIG. 11 denotes a board panel installed at a rear side of the connecting housing 332, for providing a space for various sensors, a control panel, and a cable.

A sliding surface 3321 for guiding vertical movement of the finger fixing block 340 is provided in the front interior of the connecting housing 332, and the sliding surface 3321 may be provided with a plurality of guide rails 3322 disposed vertically.

A gripping interlocking guide 3325 connected to the finger 360 is integrally provided at a rear end of the sliding surface 3321 formed in the front interior of the connecting housing 332. The gripping interlocking guide 3325 includes a vertical guide portion 3326 vertically extending from an upper side to a lower side thereof, and an inclined guide portion 3328 extending from a lower end of the vertical guide portion 3326 to be inclined laterally.

The finger fixing block 340 is a member for fixedly supporting the finger 360, and is vertically moved with respect to the gripper body 330.

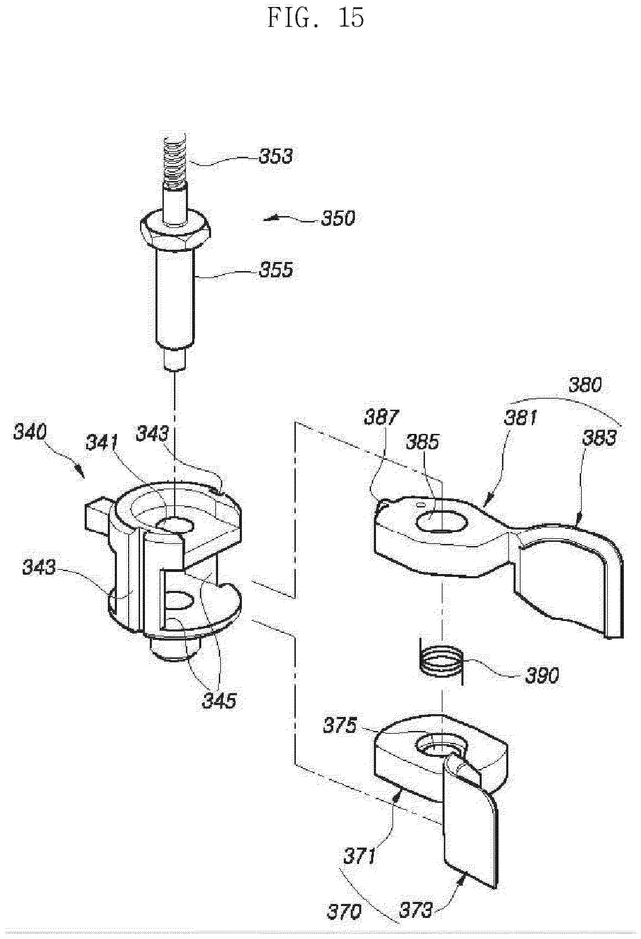

Referring to FIG. 15, the finger fixing block 340 according to the embodiment of the present invention is inserted into the sliding surface 3321 of the connecting housing 332 such that vertical movement of the finger fixing block 340 is guided, and a guide groove 343 fitted with the guide rail 3322 formed on the sliding surface 3321 of the connecting housing 332 such that vertical movement of the guide groove 343 is guided is provided on an outer peripheral surface of the finger fixing block 340.

The finger fixing block 340 has a shaft hole 341 through which a hinge shaft 355 provided in the upward/downward driving shaft 353 constituting the upward/downward driving unit 350 passes to be coupled to the shaft hole 341, and a pair of finger support units 345 the first fixing piece 371 and the second fixing piece 381 constituting the finger 360 are provided at opposite interiors of the finger fixing block 340.

Accordingly, the finger fixing block 340 reciprocates between lower and upper ends of the connecting housing 332 to linearly move according to an operation of the upward/downward driving unit 350.

The upward/downward driving unit 350 is a member connected to the finger fixing block 340, for providing upward/downward driving power to the finger fixing block 340, and substantially provides upward/downward driving power to the finger fixing block 340 and provides gripping driving power to the finger at the same time.

Referring back to FIG. 11, the upward/downward driving unit 350 according to the embodiment of the present invention includes an upward/downward driving motor 351 mounted to the upper fixed member 331, and an upward/downward driving shaft 353 connected to the upward/downward driving motor 351 to be moved upwards and downwards. In detail, a screw type upward/downward driving shaft 353 is screw-coupled to the upward/downward driving motor 351, and a hinge shaft 355 provided at a lower end of the upward/downward driving shaft 353 is rotatably coupled to the finger fixing block 340.

Accordingly, the screw type upward/downward driving shaft 353 interlocks the upward/downward driving motor 351 to be linearly moved upwards and downward as the upward/down driving motor 351 rotates forwardly and reversely, and the finger fixing block 340 interlocks with the upward/downward driving shaft 353 to be linearly moved upwards and downwards in an interior of the connecting housing 332.

The finger 360 includes first and second gripping ends 373 and 383 which press opposite sides of a circumferential surface of the test tube 2 while facing each other to grip the test tube 2.

As described above, the finger 360 has no separate driving unit for gripping or separating the test tube 2, and interlocks with vertical movement of the finger fixing block 340 due to the upward/downward driving unit 350 to grip and separate the test tube 2.

That is, when the finger fixing block 340 is lowered as the upward/downward driving unit 350 is operated, the opposite first and second gripping ends 373 and 383 are spaced apart from each other such that the test tube 2 is accommodated in a space therebetwen, and when the finger fixing block 340 is raised as the upward/downward driving unit 350 is operated, the opposite first and second gripping ends 373 and 383 get closer to each other to grip the test tube 2.

Referring to FIG. 15, the finger 360 according to the embodiment of the present invention includes the first finger 370 and the second finger 380.

The first finger 370 includes a first fixing piece 371 coupled to the finger fixing block 340, and a first gripping end 373 extending from one end of the first fixing piece 371. The first shaft hole 375 through which the hinge shaft 355 of the upward/downward driving shaft 353 passes is provided at a central portion of the first fixing piece 371, and an outer peripheral surface of the first fixing piece 371 contacts the finger support unit 345 of the finger fixing block 340.

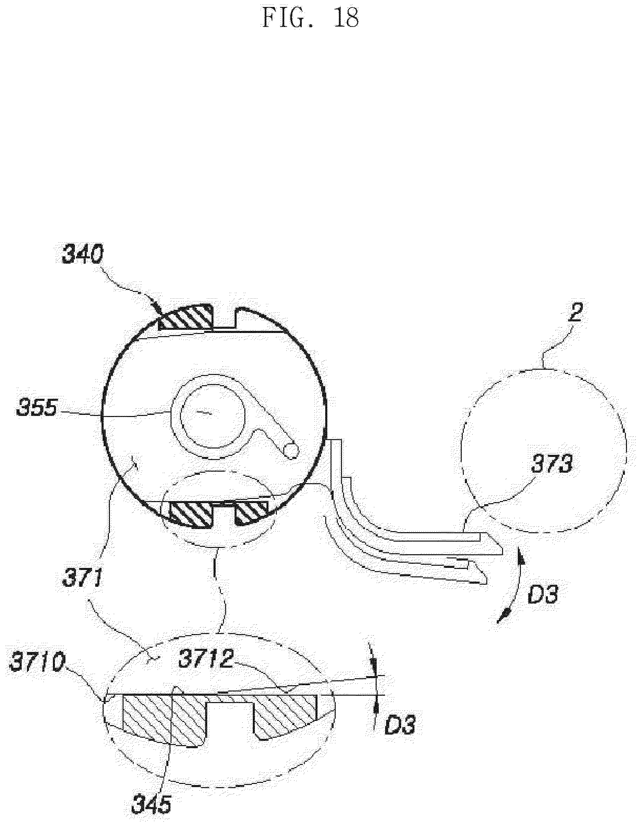

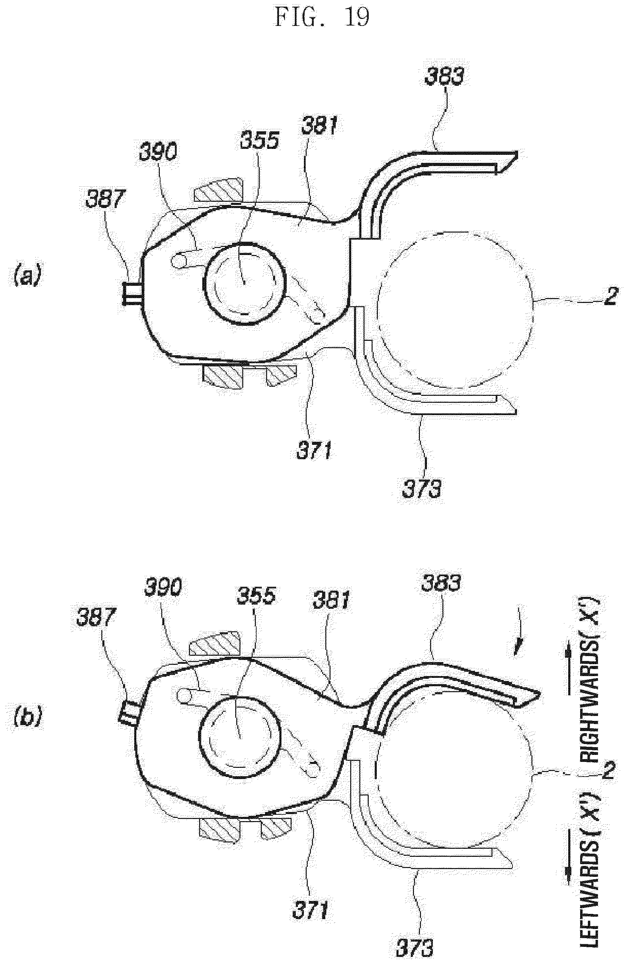

Then, referring to FIGS. 18 and 19, an outer surface of the first fixing piece 371 is rotated leftwards and rightwards about the hinge shaft 355 while maintaining a gap with the finger support unit 345. In detail, the finger support units 345 provided at opposite sides of the finger fixing block 340 have a flat structure, whereas first and second support surfaces 3710 and 3712 are formed on an outer peripheral surface of the first fixing piece 371 contacting the finger support units 345 to have a predetermined inclination D3.

Accordingly, the first finger 370 is rotated about the hinge shaft 355 in a leftward/rightward direction corresponding to an inclination D3 of the first and second support surfaces 3710 and 3712. In this way, the leftward and rightward rotation angle D3 given to the first finger 370 is achieved by realizing an angle corresponding to the leftward/rightward inclination of the test tube 2, a lower end of which is inserted into the hole 11 of the palette 10, and accordingly, the leftward/rightward rotation angle D3 of the first finger 370 may be adjusted by properly changing the inclination D3 of the first and second support surfaces 3710 and 3712.

The second finger 380 includes a second fixing piece 381 coupled to the finger fixing block 340, and a second gripping end 382 extending from one end of the first fixing piece 381 and facing the first gripping end 373. Then, the second fixing piece 381 is stacked on the first fixing piece 371, and the second gripping end 383 continues to be located at a position facing the first gripping end 373. Then, the second fixing piece 381 is coupled to the first fixing piece 371 in a stack structure, and the second gripping end 383 continues to face the first gripping end 373. Then, a second shaft hole 385 through which the hinge shaft 355 of the upward/downward driving shaft 353 is provided at a central portion of the second fixing piece 381, and a protruding support end 387 contacting a gripping interlocking guide 3325 of the connecting housing 332 is provided at one side of an outer peripheral surface of the second fixing piece 381 which is opposite to the second gripping end 383. Then, the protruding support end 387 may be a roller or a bearing to reduce frictional resistance, achieve a stable operation, and reduce noise when contacting the gripping interlocking guide 3325 of the connecting housing 332.

Meanwhile, the first finger 370 and the second finger 380 are resiliently installed such that the first gripping end 373 and the second gripping end 383 which face each other get closer to each other to be pressed by each other. Referring to FIGS. 15 and 19, according to the embodiment of the present invention, a second return spring 390 is interposed between the first fixing piece 371 and the second fixing piece 381 that form a stack structure and presses the first gripping end 373 and the second gripping end 383 such that the first gripping end 373 and the second gripping end 383 get closer to each other about the hinge shaft 355. Accordingly, the second return spring 390 corresponds to a gripping pressure applied to a side surface of the test tube 2, and may adjust a gripping pressure by properly changing an elastic coefficient according to a used test tube.

Referring to FIG. 19A, the protruding support end 387 formed in the second fixing piece 381 is guided by the inclined guide portion 3328 formed in the connecting housing 332 such that the second gripping end 383 is spaced apart from the first gripping end 373 while the first and second fingers 370 and 380 are lowered maximally, the first and second fingers 370 and 380 are guided by the inclined guide portions 3328 due to the upward/downward driving unit 350 such that the second gripping end 383 gets gradually closer to the first gripping end 373 while the first and second fingers 370 and 380 are lowered maximally.

While the first and second fingers 370 and 380 are lowered maximally such that the first and second gripping ends 373 and 383 are spaced apart from each other, the first and second support surfaces 3710 and 3712 of the first finger 370 contacting the finger support unit 345 of the finger fixing block 340 maintain an inclination D3 as described above, so that when a reaction force is applied to the first gripping end 373, a structure by which the first gripping end 373 can overcome a restoring force of the second return spring 390 to be rotated outwards (leftwards) by the inclination D3 is achieved.

In addition, the second finger 380 is installed to be rotated about the hinge shaft 355 and an opposite end of the protruding support end 387 which does not contact the inclined guide portion 3328, so that when a reaction force is applied to the second gripping end 383, a structure by which the second gripping end 383 can overcome a restoring force of the second return spring 390 to be rotated outwards (rightwards) is achieved.

Meanwhile, referring to FIG. 19B, when the finger fixing block 340 is raised as the upward/downward driving unit 350 is operated, the protruding support end 387 formed in the second fixing piece 381 deviates from the inclined guide portion 3328 of the connecting housing 332 to be supported by the vertical guide portion 3326, so that the second gripping end 383 is rotated about the hinge shaft 355 by a restoring force of the second return spring 390 and gets closer to the first gripping end 373 to grip the test tube 2.

In this way, even while the first and second gripping ends 373 and 383 grip the test tube, the first finger 370 can overcome a restoring force of the second return spring 390 and can be rotated outwards (leftwards) by a gap corresponding to the inclination D3 of the first and second support surfaces 3710 and 3712, and the second finger 380 also can overcome a restoring force of the second return spring 390 and can be rotated outwards (rightwards).

Meanwhile, a sensor which can be applied to the gripper 300 having the above-described configuration will be described as follows.

First, an upper/lower limit detecting sensor for detecting a maximum height position and a minimum height position of the finger 360 may be provided. It is preferable that the upper/lower limit detecting sensor is installed in a connecting board 3320 provided in the connecting housing 332 for providing a vertical movement section of the finger fixing block 340 to which the finger 360 is coupled. The vertical movement section for the gripper 300 is satisfactory as long as the size thereof is at least larger than a height by which the test tube 2 can be separated from the hole 11 of the palette 10, that is, the depth of the hole 11 of the palette 10, whereby promptness and accuracy of control of the gripper 300 can be increased by receiving more accurate upper and lower limit positions from the upper/lower limit detecting sensor and interrupting driving of the upward/downward driving unit 350 based on the received upper and lower limit positions even though an operation of the upward/downward driving unit 350 may be realized by setting a vertical movement section of the upward/downward driving unit 350 in advance.

A test tube insertion position detecting sensor for detecting whether the test tube 2 is introduced between the first and second fingers 370 and 380 in the process of moving the gripper 300 forwards toward the test tube 2 by the gripper feeding unit 200 may be applied. The test tube insertion position detecting sensor may be installed at a selected position of the finger 360, the finger fixing block 340, the connecting housing 332, and the lower fixed member 333.

The gripper 300 realizes an operation of gripping the finger 360 in association with an operation of raising the finger 360, and a test tube height detecting sensor for determining whether the test tube 2 is completely separated from the hole 11 of the palette 10 may be applied after both the operation of raising the finger 360 and the operation of gripping the finger 360 are completed to separate the test tube 2 from the hole 11 of the palette 10. The test tube height detecting sensor may be installed in the upper fixed member 331 or the connecting housing 332 of the gripper body 330 which may face the upper end of the test tube 2 gripped by the finger 360.

By applying the test tube height detecting sensor, for example, when a lower end of the test tube 2 is press-fitted with the hole 11 of the palette 10 such that a strong frictional force is applied as a reaction force between the hole 11 and the test tube 2 during the operation of raising the finger 360 and the operation of gripping the finger 360, the finger 360 may slip from the test tube 2 when the finger 360 pressing a side surface of the test tube 2 is raised. Then, the finger 360 may maintain a maximum height position, but the test tube 2 may not be completely separated from the hole 11 of the palette 10. In this way, the test tube height detecting sensor may detect a malfunction during the operation of raising (separating) the test tube 2 to stop the operation of the gripper or promptly take a next measure through an alarm unit such as a buzzer, a lamp, and a display.

Meanwhile, reference numeral S1 of FIG. 9 denotes a test tube identifying sensor, and as shown, the test tube identifying sensor S1 is installed on a rear side of the gripper 300 to detect a rear area of the gripper 300. For example, before the leftward/rightward feeding unit 210 of the gripper feeding unit 200 is driven to grip the test tube 2 accommodated in the left and right accommodating parts 110A and 110B and the gripper 300 is fed to the left and right accommodating parts 110A and 110B, the test tube identifying sensor S1 may identify the test tube 2 accommodated in the left accommodating part 110A or the right accommodating part 110B in advance, whereby an unnecessary feeding operation of the gripper feeding unit 200 can be reduced. Various detection sensors for actually detecting a gripping state of the test tube 2 as well the finger 360 are provided at the front side of the gripper 300, and the test tube identifying sensor S1 is prevented from interrupting with the detection sensors as well as the finger 360.

Accordingly, existence of a test tube 2 is identified in advance while the gripper 300 is fed in a forward/rearward direction Y by driving the forward/rearward feeding unit 230 of the gripper feeding unit 200 between the left and right accommodating parts 110A and 110B, the gripper 300 is rotated (180 degrees) by driving the rotary feeding unit 250 of the gripper feeding unit 200, and the gripper 300 is completely fed to the corresponding test tube 2 by driving the leftward/rightward feeing unit 210 of the gripper feeing unit 200.

An operation of separating and feeding the test tube 2 inserted into the hole 11 of the palette 10 by the gripper 300 will be described as follows.

First, the gripper 300 is moved forwards (Y") toward the left accommodating part 110A or the right accommodating part 110B in which the palette 10 is positioned by driving the leftward/rightward feeding unit 210 of the gripper feeding unit 200.

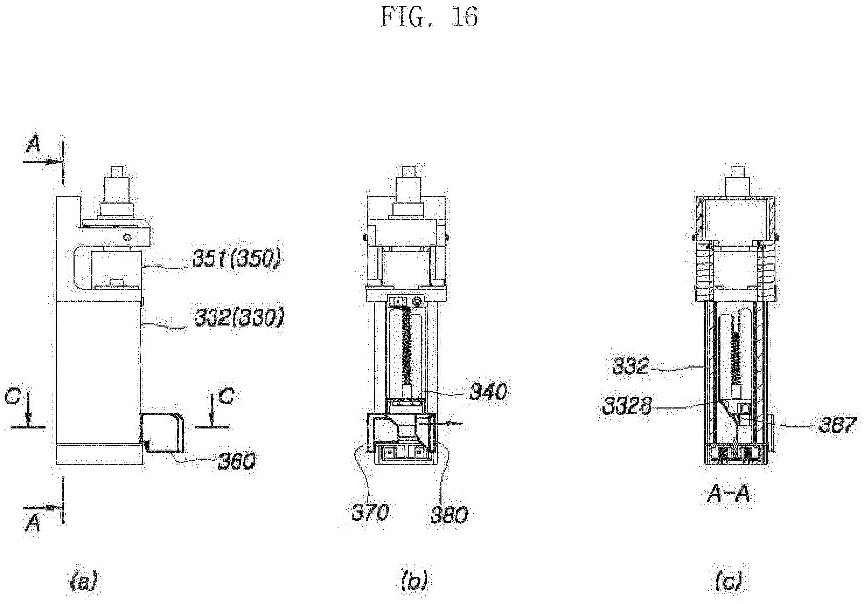

Then, as shown in FIGS. 16 and 19A, the gripper body 300 maintains a vertical position about the tilting rotary shaft 320 due to weight and the first return spring 325. The first and second fingers 370 and 380 continue to be maximally lowered at a lower end of the connecting housing 332, and the protruding support end 387 of the second finger 380 is supported by the inclined guide portion 3328 of the connecting housing 332 to be spaced apart from the first finger 370 about the hinge shaft 355 while overcoming a restoring force of the second return spring 390.

It is detected whether the test tube is accurately inserted between the first and second fingers 370 and 380 by the test tube insertion position detecting sensor while the test tube is inserted between the first and second fingers 370 and 380 through continuous driving of the gripper feeding unit 200, and forward driving of the feeding unit is ended in response to a received signal of the test tube insertion position detecting sensor and an operation of gripping and separating the test tube is performed immediately.

Then, if at least a portion of the side surface of the test tube 2 contacts the first finger 370 or the second finger 380 in the process of inserting the test tube 2 between the first and second fingers 370 and 380, the first finger 370 and the second finger 380 performs an operation of accommodating a reaction force of the test tube 2 in the leftward/rightward direction X' with respect to the hinge shaft 355 and the test tube 2 contacting the corresponding finger 360 is moved in an opposite direction by a restoring force of the second return spring to the contrary such that the test tube 2 continues to be located at a more accurate position between the first and second fingers 370 and 380.

When the test tube inserted into the hole 11 of the palette 10 maintains a position error state in which the test tube is inclined in a leftward/rightward direction X', the test tube 2 may be smoothly inserted between the first and second fingers 370 and 380, and since the test tube elastically collides due to the second return spring 390, damage to the test tube 2 may be prevented.

In this way, by securing a gap by which the first and second fingers 370 and 380 may be expanded leftwards and rightwards, a low-priced detection sensor instead of a high-priced test tube insertion position detecting sensor having a relatively high precision may realize the same operation control.

In this way, if the test tube is completely inserted into the first and second fingers 370 and 380, the first and second fingers 370 and 380 as well as the finger fixing block 340 is raised by raising the upward/downward driving unit 350 such that an operation of gripping and separating the test tube 2 may be realized at the same time.

That is, the first and second fingers 370 and 380 are raised together with the finger fixing block 340 by operating the upward/downward driving motor 351. During the initial raising operation, the protruding support end 387 of the second finger 380 is guided along the inclined guide portion 3328 of the connecting housing 332, and the second fixing piece 381 gets closer toward the first fixing piece 371 while being rotated about the hinge shaft 355 at the same time.

During the continuous raising operation, the first finger 370 and the second finger 380 contact opposite sides of the test tube 2 to grip the test tube 2 at a time point when the protruding support end 387 of the second finger 380 deviates from the inclined guide portion 3328.

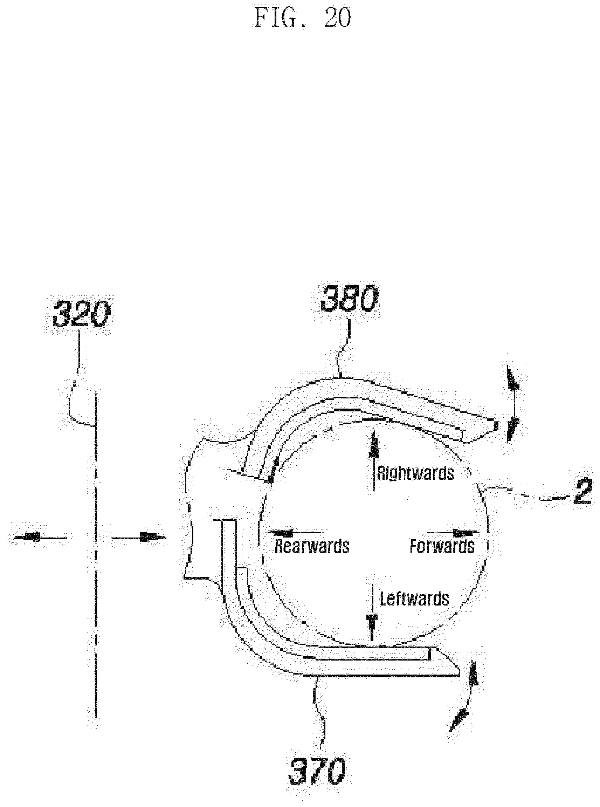

Referring to FIG. 20, when the test tube 2 is inclined in a forward/rearward direction Y' at the moment when the first and second fingers 370 and 380 grip the test tube 2 after being raised, the gripper body 330 is rotated rearwards about the tilting rotary shaft 320 by a forward/rearward (Y') reaction force transferred from the test tube 2 and then returns in an opposite direction again by the weight of the gripper body 330 and the restoring force of the first return spring 325.

Accordingly, the test tube 2 gripped by the first and second fingers 370 and 380 may return to a vertical position whose position is corrected due to the forward/rearward (Y') tilting operation, and then the test tube 2 gripped by the first and second fingers 370 and 380 may be easily separated from the hole 11 of the palette 10 through the continued raising operation of the upward/downward driving unit 350.

Further, an operation of rotating the first and second fingers 370 and 380 in a forward/rearward direction Y' about the tilting rotary shaft 320 is similar to an operation of raising (separating) a test tube while twisting the test tube by hands, and thus the test tube 2 can be easily separated even when the test tube continues to be press-fitted with the hole 11 of the palette 10.

Meanwhile, when the test tube 2 is inclined in a leftward/rightward X' at the moment when the first and second fingers 370 and 380 grip the test tube 2 after being raised, the first finger 370 and the second finger 380 are independently rotated in the leftward/rightward direction X' by a leftward/rightward (X') reaction force transferred from the test tube 2 and return in an opposite direction again by a restoring force of the second return spring 390.

The test tube 2 gripped by the first and second fingers 370 and 380 through the leftward/rightward rotation like through the forward/rearward (Y') rotation may return to a vertical position whose posture is corrected so that the test tube 2 may be easily separated from the hole 11, and the operation of rotating the first and second fingers 370 and 380 leftward and rightwards X' also realizes an operation of raising (separating) the test tube 2 while twisting the test tube 2, and accordingly, the test tube 2 can be easily separated from the hole 11 of the palette 10 even when the test tube 2 is press-fitted with the hole 11.

In this way, the gripper 300 can promptly and precisely realize an operation of gripping and separating a test tube without a malfunction in consideration of a forward/rearward (Y') or leftward/rightward (X') posture error or a press-fitting degree of the test tube inserted into the hole 11 of the palette 10.

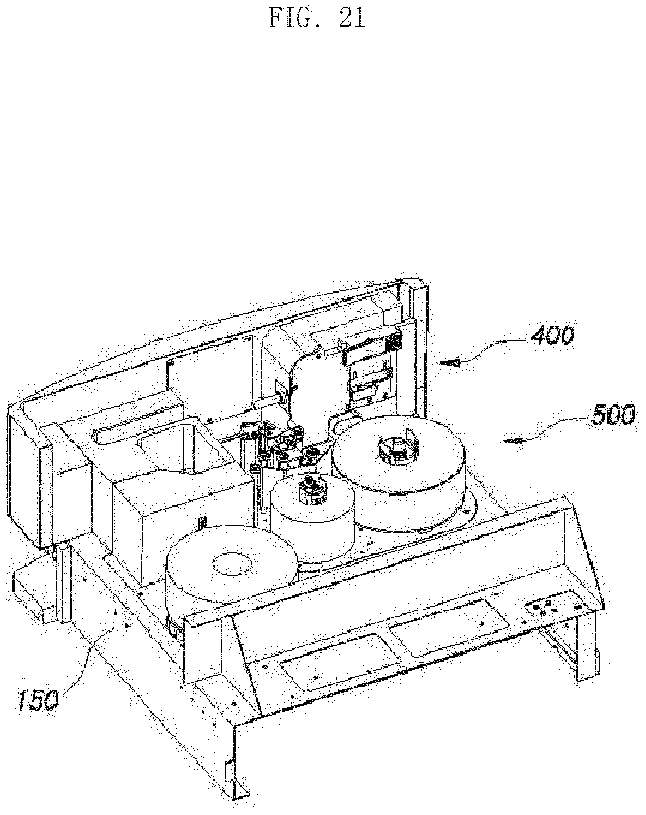

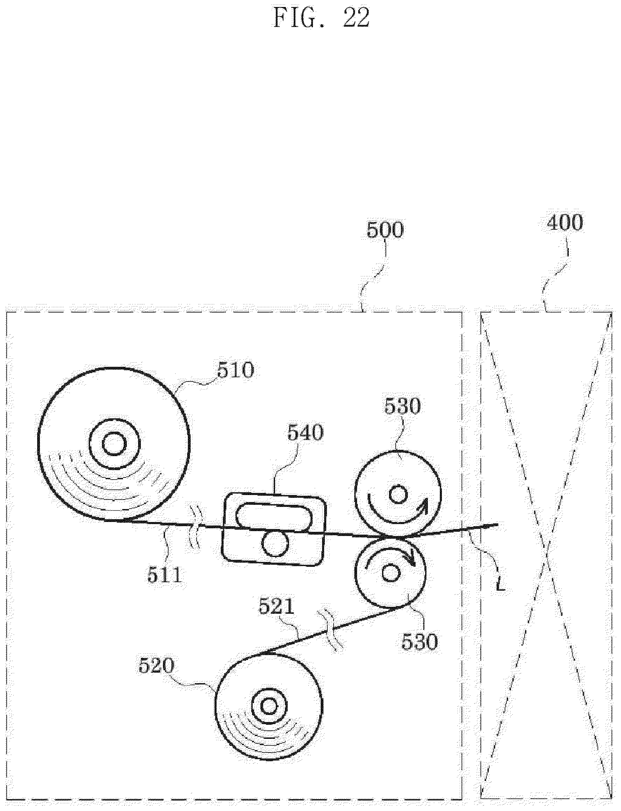

Meanwhile, referring to FIGS. 21 and 22,a label supply unit 500, which is not part of the invention on its own, for supplying a sheet of label paper toward the labeling unit 400 is provided at an upper side of the lower frame 150 in which the labeling unit 400 is installed. The label supply unit 500 generally includes a label paper roll 510 around which label paper 511 is wound in the form of a roll, and a release paper roll 520 for retrieving release paper 521 released from the label paper roll 510, and the release paper 521 is wound on the release paper roll 520 while the label paper 511 wound on the label paper roll 510 is released and the label sheet L is supplied to the labeling unit 400 with driving power of supply rollers 530. A printing unit 540 disposed between the label paper roll 510 and the release paper roll 520, for printing specific label information on the label paper 511 released from the label paper roll 510 may be provided together. The technical items related to the label supply unit 500 may be applied in various forms from the widely known technical configurations, and a more detailed description thereof will be omitted to avoid making the technical essence of the present invention unclear.

The labeling unit 400 is adapted to introduce the test tube 2 having passed through the guide hole 115 via the gripper feeding unit 200 and the gripper 300 to fix the test tube 2, attach a label supplied through the label supply unit 500 on a circumference of the test tube 2 to adhere the label on the circumference of the test tube 2 while rotating the test tube together with the label, and discharge the text tube 2 to which the label is adhered to the outside, and is installed at an upper portion of the lower frame 150 to be disposed at a lower side of the guide hole 115.

A label supply unit for supplying label paper in association with the labeling unit is provided at one side of the labeling unit. The label supply unit is a unit disposed on one surface of the labeling unit to supply a label on which label information is printed in advance toward the labeling unit according to the present invention, and generally includes a label paper roll on which label paper is wound in the form of a roll and a release paper roll for retrieving release paper released from the label paper such that the release paper is wound on the release paper roll while the label paper wound on the label paper roll is released and only the label paper is supplied to the labeling unit. In addition, a printing unit disposed between the label paper roll and the release paper roll to print specific label information on the label paper released from the label paper roll in advance may be provided. The technical items related to the label supply unit and the printing unit may be applied in various forms from the widely known technical configurations.

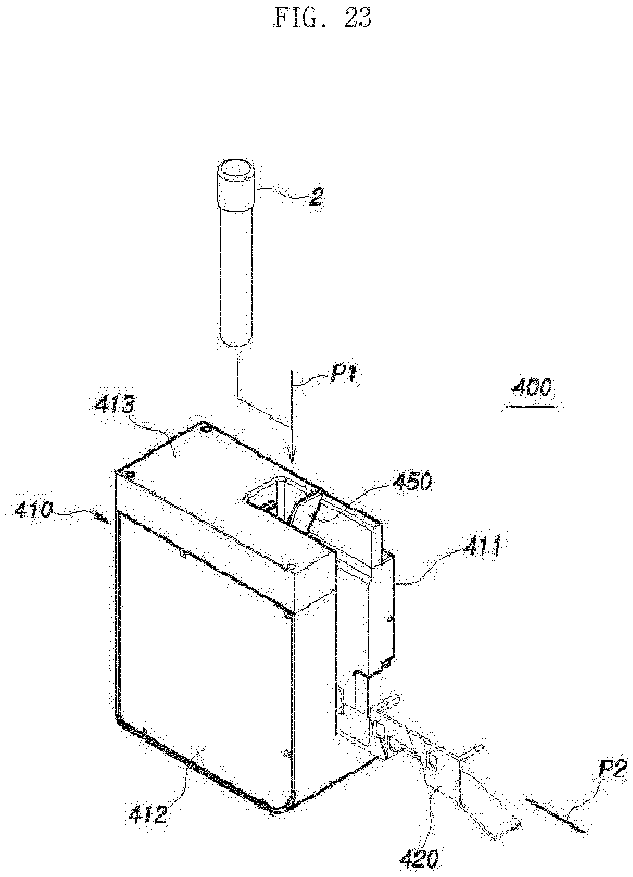

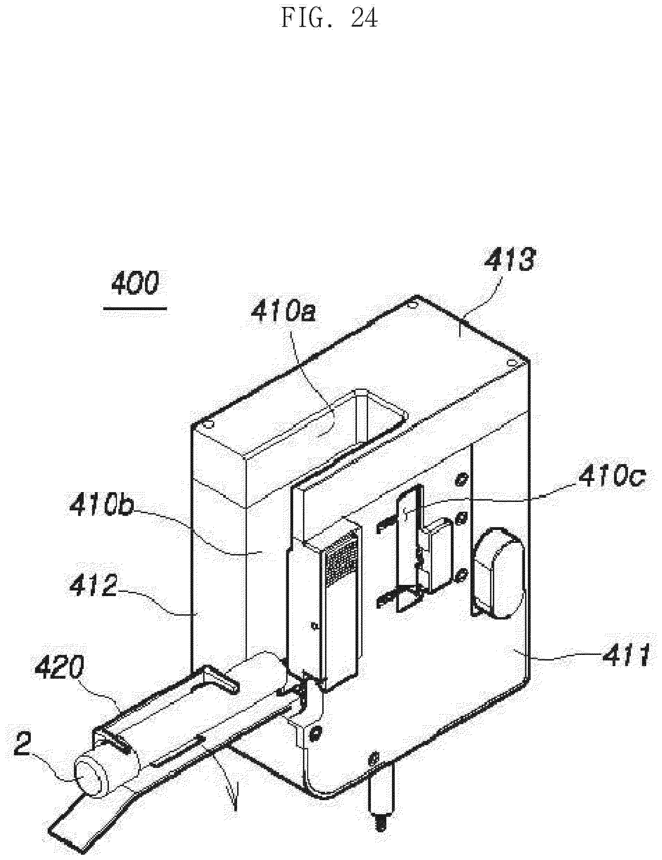

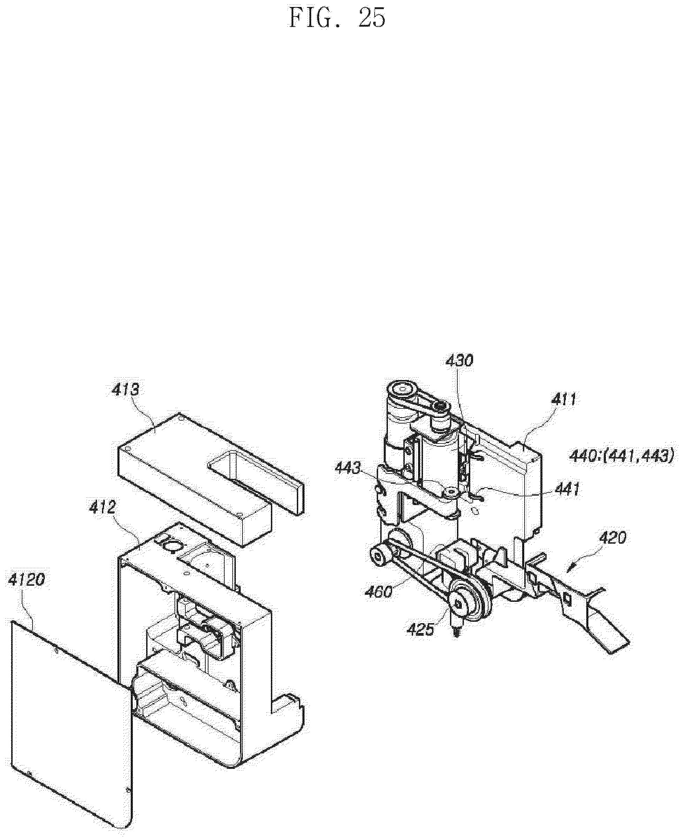

Referring to FIGS. 23, 24, and 25, the labeling unit 400 includes a labeling frame 410, a holding member 420, a driving roller 430, and a press roller 440.

The labeling frame 410 is configured such that various elements of the labeling unit 400 are installed in and supported by the labeling frame 410. An test tube introducing hole 410a for accommodating the test tube 2 having passed through the guide hole 115 formed in the upper frame 110 is provided at an upper portion of the labeling frame 410, a label supply slot 410c for accommodating label paper supplied from the label supply unit 500 into the labeling frame 410 is provided on a rear surface of the labeling frame 410, and a test tube discharge hole 410b for discharging the test tube 2 on which the label is completely attached is provided on one side surface of the labeling frame 410. A label paper detecting sensor for identifying existence of label paper may be provided in the label supply slot 410c. The labeling frame 410 according to the embodiment of the present invention is defined by a rear frame 411, a front frame 412, and an upper frame 413, and has a substantially four-sided structure. An introduction hole 410a at an upper portion of the labeling frame 410 and a discharge hole 410b on a side surface of the labeling frame 410 extend to form an L shape by assembling the rear frame 411, the front frame 412, and the upper frame 413.

A holding member 420 is a member for fixedly supporting the test tube 2 at a proper height such that a label may be attached to a circumference of the test tube 2 introduced into the holding member 420, and has a function of rotating the test tube 2 on which a label is attached to discharge the test tube 2 to a lateral side as well as a function of fixedly supporting the test tube 2 introduced into the holding member 420 at a proper height. That is, the holding member 420 is coupled to the labeling frame 410 to be rotated between a first position P1 for introducing the test tube 2 having passed through the guide hole 115 of the upper frame 110, and a second position P2 for discharging the test tube 2 to the outside. As shown, the test tube is completely inserted into the labeling frame 410 at the first position P1, and protrudes to the outside of the labeling frame 410 at the second position P2.

Although the first position P1 corresponds to a vertical state and the second position P2 corresponds to a horizontal state in the shown embodiment, the test tube 2 may be horizontally introduced and then vertically discharged.

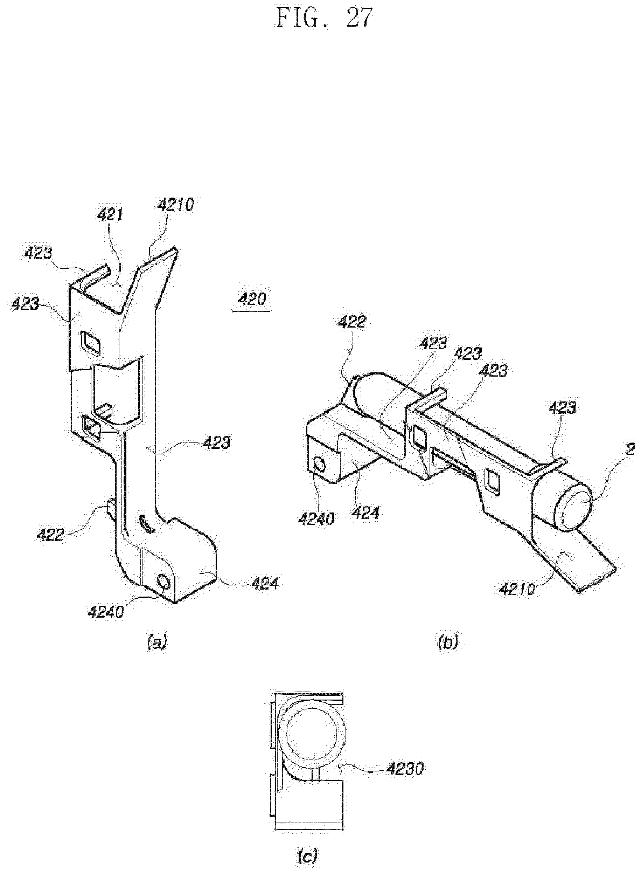

Referring to FIG. 27, the holding member 420 according to the embodiment of the present invention integrally includes an upper introduction opening 421 for introducing the test tube 2 having passed through the introduction hole 410a of the labeling frame 410 into the holding member 420, a lower stopper 422 for supporting a lower end of the test tube 2 introduced into the holding member 420, and a side stopper 423 connecting the upper introduction opening 421 and the lower stopper 422, for preventing separation of the test tube 2 introduced into the holding member 420.

An inclined guide portion 4210 for guiding introduction of the test tube 2 that approaches the upper introduction opening 421 from the outside may be provided in the upper introduction opening 421.

The side stopper 423 merely corresponds to a stopper structure for rotating the test tube 2 in the process of being rotated to the second position P2 to discharge the test tube 2 later, and maintains a geometric shape in which locations corresponding to the label paper, the driving roller 430, and the press roller 440 are partially opened such that an interior space provided by the side stopper 423 has a space larger than the diameter of the test tube 2, the label paper, the driving roller 430, and the press roller 440 disposed on a side of the holding member 420 are allowed to contact a circumference of the test tube 2 inserted into the holding member 420 in a fashion in which the the label paper, the driving roller 430, and the press roller 440 completely surrounds a circumference of the test tube 2, and interference is avoided in the process of rotating the holding member 420. Accordingly, the side stopper will do good as long as it may prevent the test tube 2 from being separated from the holding member 420 in the process of rotating the test tube 2 form the first position P1 to the second position P2 together with the lower stopper 422.

A side opening 4230 for allowing separation of the test tube 2 is formed at one side of the side stopper 423. The side opening 4230 is provided on a side surface of the holding member 420 perpendicular to the rotation direction such that the test tube 2 cannot be separated through the side opening 4230 in the process of rotating the holding member 420 from the first position P1 to the second position P2. That is, as in the shown embodiment, a cross-sectional structure of the side stopper 423 including the side opening 4230 has a stapler shape. Of course, the side stopper 423 may has an arc shape such as a C-shaped cross-section unlike the shown embodiment.

Subsequently, an extension bracket 424 having a shaft hole 4240 is formed in the lower stopper 422 of the holding member 420, and the rotary shaft 424 passes through the shaft hole 4240 to be coupled to the frame 410.

A test tube detecting sensor (not shown) for detecting the presence of the test tube inserted at the first position P1 and the type (height) of the test tube may be provided in the holding member 420. It may be accurately identified whether the test tube is discharged in the following process of discharging the test tube through the test tube detecting sensor.

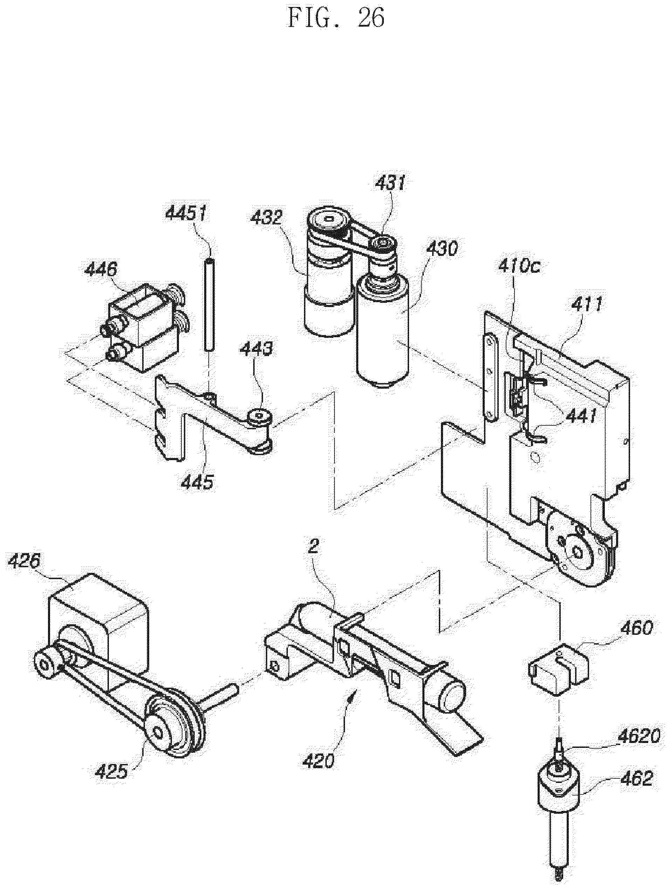

The rotary shaft 425 of the holding member 420 may be directly connected to an output shaft of a swing motor 426, and as shown in FIG. 26, the swing motor 426 may be disposed on a side surface of the rotary shaft 425 and an output shaft of the swing motor 426 and the rotary shaft 425 may realize a power connection unit of a belt and pulley mechanism. Accordingly, the forward/rearward size of the frame 410 may be realized compactly.

Meanwhile, according to the holding member 420, if the test tube 2 is introduced from the first position P1 into the interior of the holding member 420, a lower end of the test tube 2 is supported by the lower stopper 422. The test tube 2 accommodated in the left and right accommodating parts 110A and 110B be a test tube having various sizes (lengths) according to contents and the type of the test. The location where a label is placed on a test tube 2 may vary according to the length of the test tube, and thus label attachment location of various types of test tubes may not be uniformly secured.

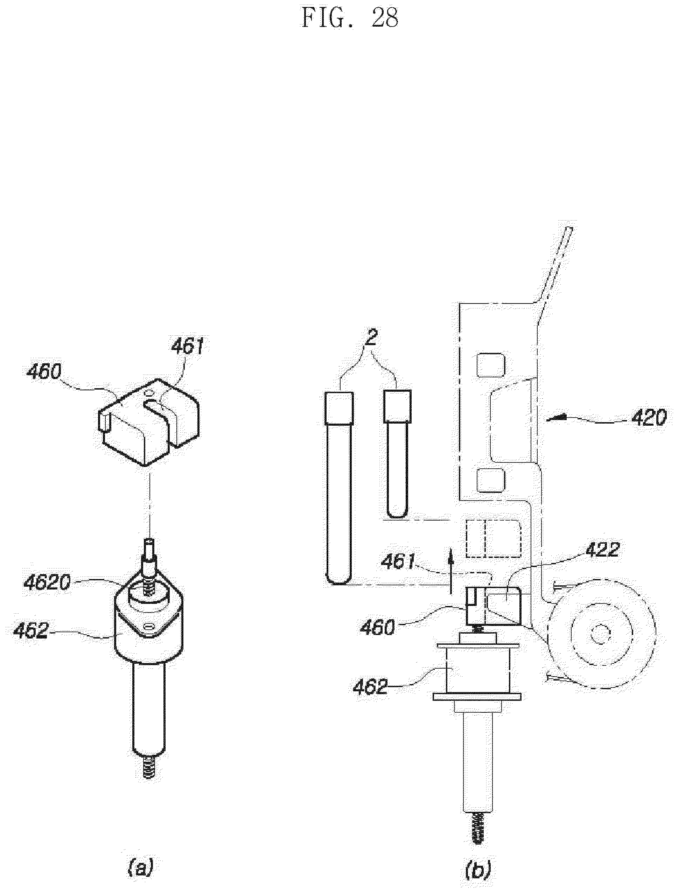

Thereto, a test tube insertion position adjusting unit for adjusting an insertion depth of a test tube 2 that waits for an labeling operation at the first position P1 may be provided. Referring to FIGS. 26 and 28, the test tube insertion position adjusting unit according to the embodiment of the present invention includes a movable stopper installed on the frame 410 to be moved in a lengthwise direction (insertion direction) of a test tube inserted into the holding member 420 maintaining the first position P1.

The movable stopper 460 is maintained at a position at least higher than that of the lower stopper 422 of the holding member 420, and a slot 461 through which the lower stopper 422 passes is provided in the movable stopper 460 such that the lower stopper 422 passes through the movable stopper 460 to support a lower end of the test tube 2 while moving during a rotation of the holding member 420 from the first position P1 to the second position P2. Accordingly, a compact design may be allowed by using a structure in which the movable stopper 460 and the holding member 420 overlap each other.

The movable stopper 460 may be formed of a resilient material to reduce an impact applied to a lower end of the test tube 2 inserted into the holding member 420, and may be a concave portion having a shape corresponding to the generally convex lower end of the test tube 2.

A test tube height detecting sensor (not shown) for determining a height of a label actually attached to a test tube by detecting an elevation height of the movable stopper 460 may be provided.

The movable stopper 460 is rotatably coupled to an end of a screw 4620 connected to an elevation motor 462 to be moved along the screw 4620 in association with the elevation motor 462 as the elevation motor 462 is rotated forwardly and reversely and be elevated in an insertion direction of the test tube 2 facing the holding member 420 maintaining the first position P1.

A label may be uniformly attached to a proper intermediate location of a corresponding test tube or the user may arbitrarily set an attachment location of a label irrespective of a length of the test tube 2 inserted into the holding member 420 through the test tube insertion position adjusting unit including the movable stopper 460.

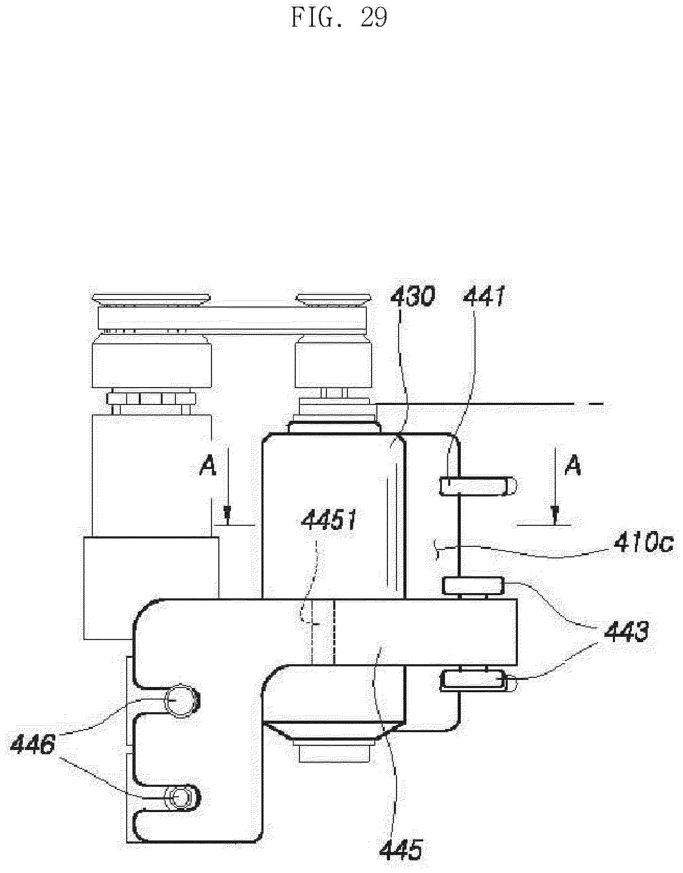

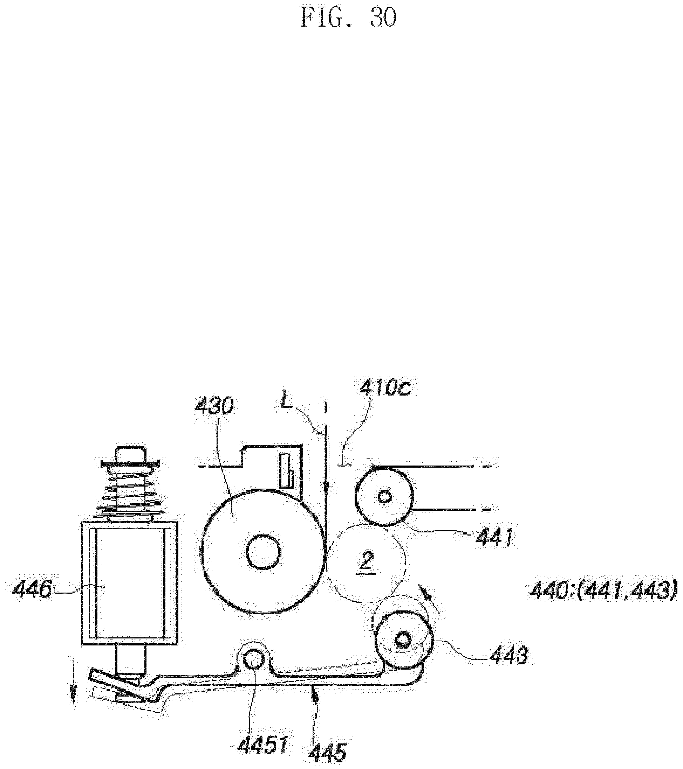

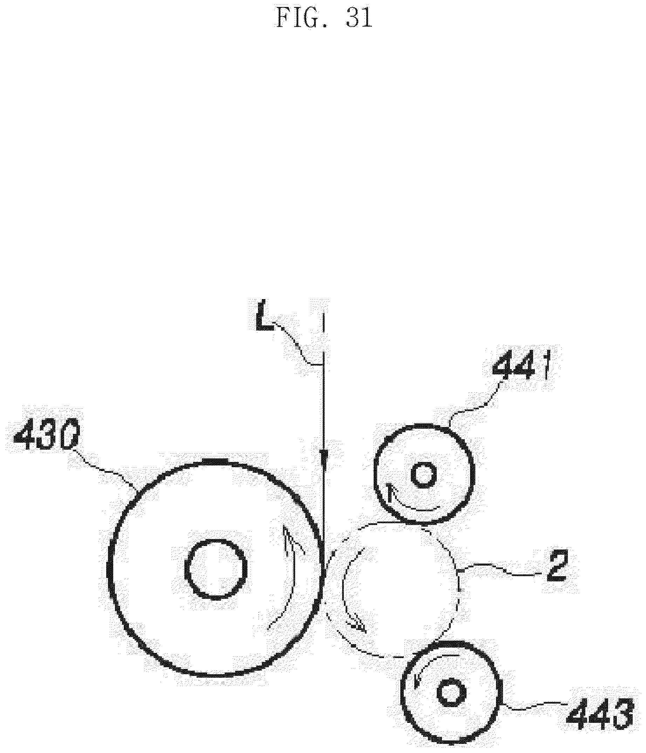

Referring to FIGS. 26, 29, 30, and 31, the driving roller 430 is a member for providing rotating power for attaching a label on a test tube introduced inwards, and is disposed at one side (the left side of the drawing) of the test tube 2 inserted into the holding member 420 maintaining the first position P1. The driving roller 430 is configured such that a rotary shaft 431 is vertically coupled to the labeling frame 410 to maintain a predetermined gap from the test tube 2 such that the label L supplied through the label supply slot 410c of the labeling frame 410 is inserted between the test tube 2 and the driving roller 430, and contacts a circumference of the test tube 2 inserted into the holding member 420 while the label L being interposed between the driving roller 430 and the test tube 2 through an operation of the press roller 440.

Although one driving roller 430 is provided, two or more driving rollers may be provided. In addition, a plurality of driving rollers may be provided in a lengthwise direction (insertion direction) of a test tube to prevent a rotation center of the test tube 2 from being twisted.

The driving roller 430 also may be directly connected to an output shaft of the rotary motor 432, and as in the shown exemplary embodiment, the rotary shaft 431 of the driving roller 430 and an output shaft of the rotary motor 432 may be connected to each other by a power connecting unit such as a belt and pulley mechanism.

Referring to FIGS. 26, 29, and 30, the press roller 440 is a member for connecting the driving roller 430 and the test tube 2 to transfer rotating power of the driving roller 430 to the test tube 2 and fixedly supporting a rotation center of the rotating test tube 2 together with the driving roller 430, and is disposed on a side substantially opposite to the press roller 430 while the test tube 2 inserted into the holding member 420 maintaining the first position P1 being interposed between the press rollers 430 and 440. A plurality of press rollers 440 may be provided to stably support a circumference of the test tube 2.

According to an exemplary embodiment, not forming part of the invention, when one driving roller 430 is provided, two press rollers 440 are provided to secure three support points on a circumference of the test tube 2 together with the driving roller 430. That is, one driving roller 430 and two press rollers 440 form a triangular structure while the test tube 2 is located therebetween.

The press roller 440 includes one fixed press roller 441 and one movable press roller 443.

The fixed press roller 441 is fixedly installed in the labeling frame 410 to be rotated, and the movable press roller 443 may get closer to or farther away from the rotation center of the test tube 2.

In an exemplary embodiment for satisfying a movement structure of the movable press roller 443 includes a rotary member 445 coupled to the frame 410 by a hinge 4451. One end of the rotary member 445 is coupled such that the movable press roller 443 is rotatable about the hinge 4451 and an actuating cylinder 446 is coupled to an opposite end of the rotary member 445.

Accordingly, if the actuating cylinder 446 is expanded, the movable press roller 443 presses a circumference of the test tube 2 about the rotation center of the test tube while the rotary member 445 is rotated about the hinge 4451 such that three support points are formed at a circumference of the test tube 2 by the driving roller 430, the fixed press roller 441, and the movable press roller 443.

On the contrary, if the actuating cylinder 446 is contracted, the rotary member 445 is reversely rotated about the hinge 4451 such that the movable press roller 443 is spaced apart from the test tube 2. Then, the movable press roller 443 should be sufficiently spaced apart from the test tube 2 so as not to interfere with the holding member 420 during rotation of the holding member 420.

The actuating cylinder 446 may be an electronic valve (solenoid valve) or a pneumatic cylinder to prevent damage of the test tube 2 generally formed of a material such as glass and a resin. Of course, the actuating cylinder 446 may be a motor.

A resilient material for reducing an impact to the test tube 2 or a material for increasing friction to attenuate a slip phenomenon of the rotating test tube 2 may be applied to outer peripheral surfaces of the driving roller 430 and the press roller 440 attached to the test tube 2.

In addition, as shown, a plurality of press rollers may be provided in a lengthwise direction (insertion direction) of a test tube 2 to prevent a rotation center of the test tube 2 from being twisted.

An operation of the labeling unit 400 having the above configuration will be described as follows.

Referring to FIGS. 23, 24, 32, and 33, the test tube 2 fed into the guide hole 115 through the gripper feeding unit 200 and the gripper 300 passes through the guide hole 115 to drop and is inserted into the holding member 420 maintaining the first position P1 through the upper introduction opening 410a.

In this way, a lower end of the test tube 2 inserted into the holding member 420 is supported by the movable stopper 460 to maintain a predetermined height in the interior of the side stopper 423. In addition, since the holding member 420 maintaining the first position P1 is inserted into the labeling frame 410, the side opening 4230 is naturally closed by the labeling frame 410 and accordingly, the test tube 2 is prevented from being separated through the side opening 4230.

Here, the user may adjust an insertion depth of the test tube 2 inserted into the holding member 420 by adjusting a height of the movable stopper 460.

Thereafter, if the label L supplied through the label supply unit 500 passes through the label supply slot 410c to be supplied between the driving roller 430 and the test tube 2, the actuating cylinder 446 is operated. That is, a rod of the actuating cylinder 446 is expanded, the rotary member 445 is rotated about the hinge 4451 and the movable press roller 443 coupled to an opposite end of the actuating cylinder 446 enters the holding member 420 to be attached to a circumference of the test tube 2. The test tube 2 is supported by all of the driving roller 430, the fixed press roller 441, and the movable press roller 443 to be fixed by attaching the test tube 2 to the driving roller 430 and the fixed press roller 441 disposed on an opposite side due to the continued movement of the movable press roller 443. Then, a label L is interposed between the driving roller 430 and the test tube 2.

Thereafter, the test tube 2 is rotated in a direction opposite to a rotation direction of the driving roller 430 such that a label L is attached to the test tube 2 to correspond to the rotation speed of the rotation speed of the test tube 2 by operating the rotary motor 432 to rotate the driving roller 430.

Then, the actuating cylinder 446 continues to press the movable press roller 443 while the label L is attached such that all of the driving roller 430, the fixed press roller 441, and the movable press roller 443 form sufficient frictional forces with the rotating test tube 2.

After the label is completely attached, rotation of the driving roller 430 is stopped by stopping the rotary motor 432 and the press roller 443 is spaced apart from the test tube 2 by contracting the actuating cylinder 446.

Thereafter, the holding member 420 maintaining the first position P1 is rotated about the rotary shaft 425 by operating the swing motor 426 to be moved to the second position P2.

Since the holding member 420 moved to the second position P2 protrudes to a side of the labeling frame 410, the side opening 4230 is exposed such that the test tube 2 is separated through the side opening 4230 and is discharged while being laid down toward a tray.

Here, since the side opening 4230 provided in the holding member 420 faces a lateral side with respect to the rotation direction of the holding member 420, even a test tube 2 having a circular cross-section may not be separated from the holding member 420 maintaining the second position P2 without the help of others.

Thereto, a pusher 470 may be provided at a position of the labeling frame 410 corresponding to the second position P2 of the holding member 420 such that the pusher 470 may be inserted into the holding member 420, and thus since the holding member 420 is rotated to the second position P2 and the pusher 470 presses a circumference of the test tube 2 while being inserted into the holding member 420, the test tube 2 is compulsorily separated through the side opening 4230 of the holding member 420 to drop onto the tray t.

In this way, when the test tube 2 is compulsorily separated from the holding member 420 to the outside by the pusher 470, a tray may be installed below the holding member 420 maintaining the second position P2 so that the user may directly use a test tube on which a label is attached.

## Claims

1. Test tube gripper (300) for gripping a test tube (2), a lower end of which is inserted into a hole of a palette (10), separating the test tube (2) from the palette (10), and feeding the test tube (2), the test tube gripper (300) comprising:
a base plate (254);
a gripper body (320) connected to the base plate (254);
a finger fixing block (340) being movable upwards and downwards with respect to the gripper body (320);
an upward/downward driving unit (350) for moving the finger fixing block (340) upwards and downwards; and
a finger (360) coupled to the finger fixing block (340) to be moved upwards and downwards in association with the finger fixing block (340) such that facing gripping ends (373, 383) thereof are spaced apart from each other to accommodate the test tube (2) inside the finger (360) when the finger (360) is lowered and the facing gripping ends (373, 383) thereof get closer to each other to grip the test tube (2) accommodated inside the finger (360) when the finger (360) is raised,
**characterized in that**
the gripper body (320) is rotated forwards and rearwards about the base plate (254) against a forward/rearward reaction force of the test tube (2) generated during an operation of gripping and separating the test tube (2), and the finger (360) is rotated leftwards and rightwards about the finger fixing block (340) against a leftward/rightward reaction force of the test tube (2) generated during an operation of gripping and separating the test tube (2) and the gripper body (320) is connected to the base plate (254) to be rotated forwards and rewards with respect to the base plate (254) and is configured to be rotated about a rotary shaft (320) to maintain a vertical position due to weight, and
wherein the test tube gripper (300) further comprises a first return spring (325) connecting the gripper body (320) and the base plate (254) to press and rotate the gripper body (320) forwards about the rotary shaft (320).

2. The test tube gripper (300) of claim 1, wherein the finger (360) comprises:
a first finger (370) comprising a first fixing piece (371) connected to the finger fixing block (340), and a first gripping end (373) extending from the first fixing piece (371);
a second finger (380) comprising a second fixing piece (381) rotatably coupled to the finger fixing block (340), and a second gripping end (383) extending from the second fixing piece (381) to face the first gripping end (373); and
a second return spring (390) connecting the first finger (370) and the second finger (380), for pressing the first gripping end (373) and the second gripping end (383) such that the first gripping end (373) and the second gripping end (383) get closer to each other.

3. The test tube gripper (300) of claim 2, wherein
the gripper body (320) has a gripping interlocking guide (3325) having an inclined guide portion (3328) for spacing the second gripping end (383) from the first gripping end (373) while contacting a protruding support end (387) formed in a second fixing piece (381) when the first and second fingers (370, 380) are lowered maximally, and allowing the second gripping end (383) to get gradually closer to the first gripping end (373) when the first and second fingers (370, 380) are raised.

4. The test tube gripper (300) of claim 3, wherein
the first fixing piece (371) is connected to be rotated leftwards and rightwards from the finger fixing block (340), and first and second support surfaces (3710, 3712) for restricting leftward/rightward rotation of the first finger (370) are provided on an outer peripheral surface of the first fixing piece (371) connected to the finger fixing block (340).

5. The test tube gripper (300) of claim 1, wherein the gripper body (320) comprises:
an upper fixed member (331) connected to the base plate (254);
a lower fixed member (333) spaced downwards from the upper fixed member (331), for restricting downward movement of the finger (360); and
a connecting housing (332) connecting the upper fixed member (331) and the lower fixed member (333), for guiding upward/downward movement of the finger fixing block (340).

6. A test tube preparing apparatus (100) comprising:
a frame having a two-layered frame structure comprising an upper frame (110) in which a gripper feeding unit (200) is installed, and a lower frame (150), in which a labeling unit (400) is installed, the upper frame (110) including oppositely arranged left and right accommodating parts (110A, 110B) in which a plurality of test tubes (2) are accommodated in a vertical state,
a gripper feeding unit (200) for feeding a test tube (2) of the plurality of test tubes (2) accommodated in the left and right accommodation parts (110A, 110B) downwards to the labeling unit (400),
a test tube gripper (300) according to any one of claims 1 to 5 coupled to the gripper feeding unit (200), for gripping or separating the test tube (2),
the upper frame (110) further having at least one guide hole (115) disposed at a central portion of the upper frame (110) where the left accommodating part (110A) and the right accommodating part (110B) face each other, for moving the test tube (2), fed by the gripper feeding unit (200) and the test tube gripper (300), downwards to the labeling unit (400), and
wherein the labeling unit (400) is disposed below said guide hole (115) and is configured for attaching a label on a circumference of the test tube (2) having passed through the guide hole (115).

7. The test tube preparing apparatus (100) of claim 6 ,
wherein the test tube preparing apparatus (100) further comprises
a loading unit (120) for blocking the guide hole (115) such that the test tube (2) introduced into the guide hole (115) stands by.

8. The test tube preparing apparatus (100) of claim 7, wherein the gripper feeding unit (200) comprises:
a leftward/rightward feeding unit (210) comprising a gantry block (214) configured such that front and rear ends of the gantry block (214) are movable in a leftward/rightward direction with respect to the frame;
a forward/rearward feeding unit (230) comprising a forward/rearward movement block (232) to be movable in a forward/rearward direction with respect to the gantry block (214); and
a rotary feeding unit (250) comprising a base plate (254) coupled to the forward/rearward movement block (232) to be rotatable with respect to the forward/rearward movement block (232),
wherein the gripper feeding unit (200) feeds a gripper (300) connected to the base plate (254) in a leftward/rightward direction and a forward/rearward direction with respect to the left and right accommodating parts (110A, 110B) and rotates the gripper (300) toward the left and right accommodating parts (110A, 110B), and
wherein the rotary feeding unit (250) is reciprocally rotated between the left accommodating part (110A) and the right accommodating part (110B).

## Patentansprüche

1. Reagenzglasgreifer (300) zum Greifen eines Reagenzglases (2), dessen unteres Ende in ein Loch einer Palette (10) eingeführt wird, Trennen des Reagenzglases (2) von der Palette (10) und Zuführen des Reagenzglases (2), wobei der Reagenzglasgreifer (300) umfasst:
eine Grundplatte (254);
einen Greiferkörper (320), der mit der Grundplatte (254) verbunden ist;
einen Fingerfixierungsblock (340), der in Bezug auf den Greiferkörper (320) aufwärts und abwärts beweglich ist;
eine Aufwärts-/Abwärtsantriebseinheit (350) zum Bewegen des Fingerfixierungsblocks (340) aufwärts und abwärts; und
einen Finger (360), der mit dem Fingerfixierungsblock (340) gekoppelt ist, um in Verbindung mit dem Fingerfixierungsblock (340) aufwärts und abwärts bewegt zu werden, so dass gegenüberliegende Greifenden (373, 383) davon voneinander beabstandet sind, um das Reagenzglas (2) innerhalb des Fingers (360) aufzunehmen, wenn der Finger (360) abgesenkt ist und die gegenüberliegenden Greifenden (373, 383) näher beieinander liegen, um das im Finger (360) aufgenommene Reagenzglas (2) zu greifen, wenn der Finger (360) angehoben ist,
**dadurch gekennzeichnet, dass**
der Greiferkörper (320) um die Grundplatte (254) gegen eine Vorwärts/Rückwärts-Reaktionskraft des Reagenzglases (2) vorwärts und rückwärts gedreht wird, die während eines Vorgangs des Greifens und Trennens des Reagenzglases (2) erzeugt wird, und der Finger (360) um den Fingerfixierungsblock (340) gegen eine nach links/nach rechts gerichtete Reaktionskraft des Reagenzglases (2) gedreht wird, die während eines Vorgangs des Greifens und Trennens des Reagenzglases (2) erzeugt wird, und der Greiferkörper (320) mit der Grundplatte (254) verbunden ist, um in Bezug auf die Grundplatte (254) vorwärts und rückwärts gedreht zu werden und konfiguriert ist, um eine Drehwelle (320) gedreht zu werden, um eine vertikale Position durch Gewicht aufrechtzuerhalten, und
wobei der Reagenzglasgreifer (300) ferner eine erste Rückstellfeder (325) umfasst, die den Greiferkörper (320) und die Grundplatte (254) verbindet, um den Greiferkörper (320) vorwärts um die Drehwelle (320) zu drücken und zu drehen.

2. Reagenzglasgreifer (300) nach Anspruch 1, wobei der Finger (360) umfasst:
einen ersten Finger (370), umfassend ein erstes Fixierungsstück (371), das mit dem Fingerfixierungsblock (340) verbunden ist, und ein erstes Greifende (373), das sich von dem ersten Fixierungsstück (371) erstreckt;
einen zweiten Finger (380), umfassend ein zweites Fixierungsstück (381), das mit dem Fingerfixierungsblock (340) drehbar gekoppelt ist, und ein zweites Greifende (383), das sich vom zweiten Fixierungsstück (381) zum ersten Greifende (373) erstreckt; und
eine zweite Rückstellfeder (390), die den ersten Finger (370) und den zweiten Finger (380) verbindet, um das erste Greifende (373) und das zweite Greifende (383) zu drücken, so dass das erste Greifende (373) und das zweite Greifende (383) einander näher kommen.

3. Reagenzglasgreifer (300) nach Anspruch 2, wobei
der Greiferkörper (320) eine Greifverriegelungsführung (3325) mit einem geneigten Führungsabschnitt (3328) aufweist, um das zweite Greifende (383) vom ersten Greifende (373) zu beabstanden, während ein hervorstehendes Stützende (387) berührt wird, das in einem zweiten Fixierungsstück (381) ausgebildet ist, wenn der erste und der zweite Finger (370, 380) maximal abgesenkt sind und das zweite Greifende (383) allmählich näher an das erste Greifende (373) kommen kann, wenn der erste und der zweite Finger (373) 370, 380) angehoben werden.

4. Reagenzglasgreifer (300) nach Anspruch 3, wobei
das erste Fixierungsstück (371) verbunden ist, um vom Fingerfixierungsblock (340) nach links und nach rechts gedreht zu werden, und die erste und die zweite Stützflächen (3710, 3712) zum Einschränken der Links-/Rechts-Drehung des ersten Fingers (370) auf einer äußeren Umfangsfläche des ersten Fixierungsstücks (371) vorgesehen sind, das mit dem Fingerfixierungsblock (340) verbunden ist.

5. Reagenzglasgreifer (300) nach Anspruch 1, wobei der Greiferkörper (320) umfasst:
ein oberes festes Element (331), das mit der Grundplatte (254) verbunden ist;
ein unteres festes Element (333), das vom oberen festen Element (331) nach unten beabstandet ist, um die Abwärtsbewegung des Fingers (360) einzuschränken; und
ein Verbindungsgehäuse (332), das das obere feste Element (331) und das untere feste Element (333) verbindet, um die Aufwärts-/Abwärtsbewegung des Fingerfixierungsblocks (340) zu führen.

6. Reagenzglasvorbereitungsvorrichtung (100), umfassend:
einen Rahmen mit einer zweischichtigen Rahmenstruktur, umfassend einen oberen Rahmen (110), in dem eine Greifervorschubeinheit (200) installiert ist, und einen unteren Rahmen (150), in dem eine Etikettiereinheit (400) installiert ist, wobei der obere Rahmen (110) entgegengesetzt angeordnete linke und rechte Aufnahmeteile (110A, 110B) einschließt, in denen mehrere Reagenzgläser (2) in einem vertikalen Zustand aufgenommen sind,
eine Greifervorschubeinheit (200) zum Zuführen eines Reagenzglases (2) aus mehreren Reagenzgläsern (2), die in den linken und rechten Aufnahmeteilen (110A, 110B) aufgenommen sind, nach unten zur Etikettiereinheit (400);
einen Reagenzglasgreifer (300) nach einem der Ansprüche 1 bis 5, der mit der Greifervorschubeinheit (200) gekoppelt ist, um das Reagenzglas (2) zu greifen oder zu trennen;
wobei der obere Rahmen (110) ferner wenigstens ein Führungsloch (115) aufweist, das an einem zentralen Abschnitt des oberen Rahmens (110) angeordnet ist, wo der linke Aufnahmeteil (110A) und der rechte Aufnahmeteil (110B) einander zugewandt sind, um das Reagenzglas (2) zu bewegen, das von der Greifervorschubeinheit (200) und dem Reagenzglasgreifer (300) abwärts zur Etikettiereinheit (400) zugeführt wird, und
wobei die Etikettiereinheit (400) unterhalb des Führungslochs (115) angeordnet ist und zum Anbringen eines Etiketts an einem Umfang des Reagenzglases (2) konfiguriert ist, das durch das Führungsloch (115) geführt wurde.

7. Reagenzglasvorbereitungsvorrichtung (100) nach Anspruch 6,
wobei die Reagenzglasvorbereitungsvorrichtung (100) ferner umfasst eine Ladeeinheit (120) zum Blockieren des Führungslochs (115), so dass das in das Führungsloch (115) eingeführte Reagenzglas (2) bereitsteht.

8. Reagenzglasvorbereitungsvorrichtung (100) nach Anspruch 7, wobei
die Greifervorschubeinheit (200) umfasst:
eine Links-Rechts-Vorschubeinheit (210), umfassend einen Portalblock (214), der so konfiguriert ist, dass das vordere und hintere Ende des Portalblocks (214) in Bezug auf den Rahmen in einer Links-/Rechtsrichtung beweglich sind;
eine Vorwärts/Rückwärts-Vorschubeinheit (230), umfassend einen Vorwärts/Rückwärts-Bewegungsblock (232), der in Bezug auf den Portalblock (214) in Vorwärts-/Rückwärtsrichtung beweglich sein soll; und
eine Drehvorschubeinheit (250) mit einer Grundplatte (254), die mit dem Vorwärts-/Rückwärtsbewegungsblock (232) gekoppelt ist, um in Bezug auf den Vorwärts-/Rückwärts-Bewegungsblock (232) drehbar zu sein;
wobei die Greifervorschubeinheit (200) einen Greifer (300), der mit der Grundplatte (254) verbunden ist, in einer Links-/Rechtsrichtung und einer Vorwärts-/Rückwärtsrichtung in Bezug auf die linken und rechten Aufnahmeteile (110A, 110B) zuführt und den Greifer (300) in Richtung der linken und rechten Aufnahmeteile (110A, 110B) dreht, und
wobei die Drehvorschubeinheit (250) zwischen dem linken Aufnahmeteil (110A) und dem rechten Aufnahmeteil (110B) wechselseitig gedreht wird.

## Revendications

1. Organe de préhension de tube d'essai (300) pour saisir un tube d'essai (2), dont une extrémité inférieure est insérée dans un trou d'une palette (10), séparant le tube d'essai (2) de la palette (10) et alimentant le tube d'essai (2), l'organe de préhension de tube d'essai (300) comprenant :
une plaque de base (254) ;
un corps d'organe de préhension (320) raccordé à la plaque de base (254) ;
un bloc de fixation de doigt (340) mobile vers le haut et vers le bas par rapport au corps d'organe de préhension (320) ;
une unité d'entraînement vers le haut/vers le bas (350) pour déplacer le bloc de fixation de doigt (340) vers le haut et vers le bas ; et
un doigt (360) couplé au bloc de fixation de doigt (340) à déplacer vers le haut et vers le bas en association avec le bloc de fixation de doigt (340) de sorte que ses extrémités de préhension en vis-à-vis (373, 383) sont espacées l'une de l'autre pour loger le tube d'essai (2) à l'intérieur du doigt (360) lorsque le doigt (360) est abaissé et ses extrémités de préhension en vis-à-vis (373, 383) se rapprochent pour saisir le tube d'essai (2) logé à l'intérieur du doigt (360) lorsque le doigt (360) est levé,
**caractérisé en ce que** :
le corps d'organe de préhension (320) est entraîné en rotation vers l'avant et vers l'arrière autour de la plaque de base (254) contre une force de réaction vers l'avant/vers l'arrière du tube d'essai (2) générée pendant une opération de saisie et de séparation du tube d'essai (2) et le doigt (360) est entraîné en rotation vers la gauche et vers la droite autour du bloc de fixation de doigt (340) contre une force de réaction vers la gauche/vers la droite du tube d'essai (2) générée pendant une opération de préhension et de séparation du tube d'essai (2) et le corps d'organe de préhension (320) est raccordé à la plaque de base (254) pour être entraîné en rotation vers l'avant et vers l'arrière par rapport à la plaque de base (254) et est configuré pour être entraîné en rotation autour d'un arbre rotatif (320) pour maintenir une position verticale due au poids, et
dans lequel l'organe de préhension de tube d'essai (300) comprend en outre un premier ressort de rappel (325) raccordant le corps d'organe de préhension (320) et la plaque de base (254) pour comprimer et faire tourner le corps d'organe de préhension (320) vers l'avant autour de l'arbre rotatif (320).

2. Organe de préhension de tube d'essai (300) selon la revendication 1, dans lequel le doigt (360) comprend :
un premier doigt (370) comprenant une première pièce de fixation (371) raccordée au bloc de fixation de doigt (340), et une première extrémité de préhension (373) s'étendant à partir de la première pièce de fixation (371) ;
un second doigt (380) comprenant une seconde pièce de fixation (381) couplée en rotation au bloc de fixation de doigt (340) et une seconde extrémité de préhension (383) s'étendant à partir de la seconde pièce de fixation (381) pour faire face à la première extrémité de préhension (373) ; et
un second ressort de rappel (390) raccordant le premier doigt (370) et le second doigt (380) pour comprimer la première extrémité de préhension (373) et la seconde extrémité de préhension (383) de sorte que la première extrémité de préhension (373) et la seconde extrémité de préhension (383) se rapprochent.

3. Organe de préhension de tube d'essai (300) selon la revendication 2, dans lequel :
le corps d'organe de préhension (320) a un guide de verrouillage de préhension (3325) ayant une partie de guide inclinée (3328) pour espacer la seconde extrémité de préhension (383) de la première extrémité de préhension (373) tout en étant en contact avec une extrémité de support en saillie (387) formée dans une seconde pièce de fixation (381) lorsque les premier et second doigts (370, 380) sont abaissés au maximum, et permettant à la seconde extrémité de préhension (383) de se rapprocher progressivement de la première extrémité de préhension (373) lorsque les premier et second doigts (370, 380) sont levés.

4. Organe de préhension de tube d'essai (300) selon la revendication 3, dans lequel :
la première pièce de fixation (371) est raccordée pour être entraînée en rotation vers la gauche et vers la droite à partir du bloc de fixation de doigt (340), et les première et seconde surfaces de support (3710, 3712) pour empêcher la rotation vers la gauche/vers la droite du premier doigt (370) sont prévues sur une surface périphérique externe de la première pièce de fixation (371) raccordée au bloc de fixation de doigt (340).

5. Organe de préhension de tube d'essai (300) selon la revendication 1, dans lequel le corps d'organe de préhension (320) comprend :
un élément fixe supérieur (331) raccordé à la plaque de base (254) ;
un élément fixe inférieur (333) espacé vers le bas par rapport à l'élément fixe supérieur (331), pour empêcher le mouvement descendant du doigt (360) ; et
un boîtier de raccordement (332) raccordant l'élément fixe supérieur (331) et l'élément fixe inférieur (333), pour guider le mouvement ascendant/descendant du bloc de fixation de doigt (340).

6. Appareil de préparation de tube d'essai (100) comprenant :
un bâti ayant une structure de bâti à deux couches comprenant un bâti supérieur (110) dans lequel une unité d'alimentation d'organe de préhension (200) est installée et un bâti inférieur (150) dans lequel une unité d'étiquetage (400) est installée, le bâti supérieur (110) comprenant des parties de logement gauche et droite (110A, 110B) agencées à l'opposé dans lesquelles une pluralité de tubes d'essai (2) sont logés dans un état vertical,
une unité d'alimentation d'organe de préhension (200) pour alimenter un tube d'essai (2) de la pluralité de tubes d'essai (2) logés dans les parties de logement gauche et droite (110A, 110B) vers le bas par rapport à l'unité d'étiquetage (400),
un organe de préhension de tube d'essai (300) selon l'une quelconque des revendications 1 à 5, couplé à l'unité d'alimentation d'organe de préhension (200) pour saisir ou séparer le tube d'essai (2),
le bâti supérieur (110) ayant en outre au moins un trou de guidage (115) disposé au niveau d'une partie centrale du bâti supérieur (110) où la partie de logement gauche (110A) et la partie de logement droite (110B) se font face, pour déplacer le tube d'essai (2) alimenté par l'unité d'alimentation d'organe de préhension (200) et l'organe de tube d'essai (300), vers le bas par rapport à l'unité d'étiquetage (400), et
dans lequel l'unité d'étiquetage (400) est disposée au-dessous dudit trou de guidage (115) et est configurée pour fixer une étiquette sur une circonférence du tube d'essai (2) qui est passée à travers le trou de guidage (115).

7. Appareil de préparation de tube d'essai (100) selon la revendication 6,
dans lequel l'appareil de préparation de tube d'essai (100) comprend en outre :
une unité de chargement (120) pour bloquer le trou de guidage (115) de sorte que le tube d'essai (2) introduit dans le trou de guidage (115) est prêt.

8. Appareil de préparation de tube d'essai (100) selon la revendication 7, dans lequel l'unité d'alimentation d'organe de préhension (200) comprend :
une unité d'alimentation vers la gauche/vers la droite (210) comprenant un bloc de portique (214) configuré de sorte que les extrémités avant et arrière du bloc de portique (214) sont mobiles dans une direction vers la gauche/vers la droite par rapport au bâti ;
une unité d'alimentation vers l'avant/vers l'arrière (230) comprenant un bloc de déplacement vers l'avant/vers l'arrière (232) pour être mobile dans une direction vers l'avant/vers l'arrière par rapport au bloc de portique (214) ; et
une unité d'alimentation rotative (250) comprenant une plaque de base (254) couplée au bloc de déplacement vers l'avant/vers l'arrière (232) pour pouvoir tourner par rapport au bloc de déplacement vers l'avant/vers l'arrière (232),
dans lequel l'unité d'alimentation d'organe de préhension (200) alimente un organe de préhension (300) raccordé à la plaque de base (254) dans une direction vers la gauche/vers la droite et une direction vers l'avant/vers l'arrière par rapport aux parties de logement gauche et droite (110A, 110B) et fait tourner l'organe de préhension (300) vers les parties de logement gauche et droite (110A, 110B), et
dans lequel l'unité d'alimentation rotative (250) tourne de manière réciproque entre la partie de logement gauche (110A) et la partie de logement droite (110B).
